# EUROPEAN PATENT APPLICATION

(11) **EP 4 827 172 A1**
(43) Date of publication of application: **21.10.2026**
(21) Application number: 24910992.7
(22) Date of filing: 20.12.2024
(51) Int. Cl.: H04W 48/08

(54) **COMMUNICATION METHOD AND COMMUNICATION APPARATUS**

(30) Priority: 29.12.2023 CN 202311871702
(71) Applicant: Huawei Technologies Co., Ltd., Shenzhen, Guangdong 518129 (CN)
(72) Inventor: DENG, Taoyu, Shenzhen, Guangdong 518129 (CN); WU, Yizhuang, Shenzhen, Guangdong 518129 (CN); PAN, Qi, Shenzhen, Guangdong 518129 (CN); LI, Lun, Shenzhen, Guangdong 518129 (CN); YING, Jiangwei, Shenzhen, Guangdong 518129 (CN)
(74) Representative: Epping - Hermann - Fischer
(86) International application number: PCT/CN2024/141238
(87) International publication number: WO 2025/140064

(57) **Abstract**

This application provides a communication method and a communication apparatus. The communication method includes: A terminal device sends a first request to a first access network device, where the first request indicates that the terminal device requests to access a core network; the terminal device establishes a connection to a second access network device; and the terminal device receives first information from the second access network device, where the first information is information replied by the core network to the terminal device in response to the first request. In this technical solution, in a scenario in which the terminal device is disconnected from the first access network device before receiving the first information, that is, when the terminal device has not accessed the core network, the terminal device is assisted in continuing a procedure of accessing the core network.

## Description

This application claims priority to Chinese Patent Application No. 202311871702.2, filed with the China National Intellectual Property Administration on December 29, 2023, and entitled "COMMUNICATION METHOD AND COMMUNICATION APPARATUS", which is incorporated herein by reference in its entirety.

### TECHNICAL FIELD

Embodiments of this application relate to the communication field, and in particular, to a communication method and a communication apparatus.

### BACKGROUND

Currently, a satellite network architecture with a regenerative payload is proposed in the communication field. In the satellite network architecture with a regenerative payload, a base station is deployed on a satellite, and a terrestrial mobile terminal accesses a core network through the base station deployed on the satellite and a ground station deployed on the ground. A connection between the terminal and the base station is referred to as a service link, and a connection between the base station and the ground station is referred to as a feeder link.

In the satellite network architecture with a regenerative payload, the following problem may occur: In a procedure of initially accessing the core network by the terminal, after the terminal sends an initial access request used to request to access the core network, the terminal device is disconnected from a current base station before receiving a response message from the core network. That is, the terminal device is disconnected from the current base station before completing a procedure of accessing the core network. For example, when the terminal sends the initial access request to the base station, the feeder link between the base station and the ground station is unavailable. In this case, the terminal device needs to wait at least a time for recovering the feeder link between the base station and the ground station before receiving the response message from the core network. However, in this time period, the terminal device may be disconnected from the base station.

In this case, how to ensure that the terminal can receive the response message sent by the core network device to the terminal, to complete network access of the terminal device becomes a technical problem to be urgently resolved.

### SUMMARY

This application provides a communication method and a communication apparatus, to enable a terminal device to receive a response message sent by a core network device to the terminal in a scenario in which the terminal device is disconnected from a current base station before accessing a core network, to help the terminal device continue to complete network access.

According to a first aspect, this application provides a communication method. The method may be performed by a terminal device, may be performed by a component (for example, a chip or a chip system) configured in the terminal device, or may be implemented by a logical module or software that can implement all or a part of functions of the terminal device. This is not limited in this application.

For example, the method includes: sending a first request to a first access network device, where the first request indicates that the terminal device requests to access a core network; establishing a connection to a second access network device, and sending an identifier of the terminal device to the second access network device; and receiving first information from the second access network device, where the first information is information replied by the core network to the terminal device in response to the first request, and the first information corresponds to the identifier of the terminal device.

For example, the first information is any one of the following information replied by a core network device to the terminal device in response to the first request sent by the terminal device in a procedure of accessing the core network by the terminal device: information that indicates that the terminal device is allowed to access the core network (for example, attach accept or registration accept), an authentication request (authentication request), an N1 message, and a non-access stratum message (NAS message).

For example, after sending the first request to the first access network device and before establishing the connection to the second access network device, the terminal device is disconnected from the first access network device (for example, an RRC connection is released, a transport layer connection is released, or the terminal device moves out of coverage of the first access network device).

In this application, the first access network device and the second access network device are deployed on a satellite.

It may be understood that, after receiving the first request, the first access network device sends the first request to the core network device when a feeder link is available. Correspondingly, after receiving the first request, the core network device replies information in response to the first request. In this application, the replied information is referred to as the first information.

Specifically, in this application, after receiving the first request, a core network side determines the second access network device configured to store and forward the replied first information, and then indicates, to the second access network device, the first information replied to the terminal device. However, a terminal device side establishes the connection to the second access network device that stores the first information, and sends the identifier of the terminal device to the second access network device. In this way, the second access network device can determine, based on the identifier of the terminal device, the first information that is replied, to the terminal device, by the core network corresponding to the identifier of the terminal device, and then send the first information to the terminal device.

In this application, the identifier of the terminal device is used to identify, in an initial access procedure, the terminal device that sends the first request. For example, the identifier of the terminal device may be an international mobile subscriber identity (international mobile subscriber identification, IMSI), a subscription permanent identifier (subscription permanent identifier, SUPI), a subscription concealed identifier (subscription concealed identifier, SUCI), a globally unique temporary identity (globally unique temporary identification, GUTI), a temporary mobile subscriber identity (temporary mobile subscriber identity, TMSI), a cell radio network temporary identifier (cell radio network temporary identifier, C-RNTI), an inactive radio network temporary identifier (inactive radio network temporary identifier, I-RNTI), a combination of the C-RNTI and a RAN identifier, a combination of the I-RNTI and the RAN identifier, or the like.

It may be understood that, according to this technical solution, even if the terminal device is disconnected from the first access network device, the terminal device establishes the connection to the second access network device that stores the first information, and sends the identifier of the terminal device to the second access network device, so that the second access network device can determine, based on the identifier of the terminal device, the first information replied by the core network device to the terminal device, and then send the first information to the terminal device. Therefore, the terminal device can be assisted in completing a procedure of accessing the core network.

With reference to the first aspect, in a possible implementation, the second access network device and the first access network device are a same access network device, or the second access network device and the first access network device are different access network devices.

The second access network device and the first access network device are a same access network device. That is, an access network device that sends, to the terminal device, the first information replied by the core network device is the first access network device that receives the first request. In other words, the terminal device sends the first request to the first access network device, re-establishes a connection to the first access network device, and receives the first information that is replied by the core network device and forwarded by the first access network device to the terminal device.

The second access network device and the first access network device are different access network devices. That is, an access network device that sends, to the terminal device, the first information replied by the core network device and an access network device that receives the first request are not a same access network device.

With reference to the first aspect, in a possible implementation, the method further includes: receiving second information sent by the first access network device, where the second information indicates first duration; and establishing the connection to the second access network device includes: establishing the connection to the second access network device after the first duration.

In this technical solution, after the first access network device receives the first request, the first access network device determines the second access network device that can send, to the terminal device, the first information replied by the core network device, and determines the first duration. After the first duration ends, the terminal device can establish the connection to the second access network device.

In other words, in this technical solution, the second access network device is an access network device that a broadcast message that can be detected by the terminal device after the first duration ends is from. Alternatively, from another perspective, it may be considered that the first access network device indicates the first duration to indicate, to the terminal device, the second access network device to which a connection needs to be established, or indicate, to the terminal device, the second access network device that stores the first information replied by the core network.

That is, in this technical solution, the first access network device determines the second access network device that stores and forwards the first information replied by the core network device, and then indicates the first duration to the terminal device, so that the terminal device establishes the connection to the second access network device that stores the first information, and sends the identifier of the terminal device to the second access network device, to obtain the first information replied by the core network device, and help the terminal device complete a procedure of accessing the core network.

With reference to the first aspect, in a possible implementation, the first duration is determined by the first access network device based on ephemeris information.

Optionally, the first access network device may further determine the first duration based on the ephemeris information and at least one of the following information: a location of a satellite on which the second access network device is deployed, a location of the terminal device, and current time.

With reference to the first aspect, in a possible implementation, the method further includes: obtaining a first identifier, where the first identifier is used to identify the second access network device; and establishing the connection to the second access network device includes: when the first identifier from the second access network device is received, establishing the connection to the second access network device.

Establishing the connection to the second access network device when the first identifier from the second access network device is received may be replaced with: when a message including the first identifier is received, establishing the connection to an access network device that sends the message. It may be understood that, in this case, the access network device that sends the message is the second access network device.

Optionally, in some implementations, obtaining the first identifier includes: receiving the first identifier from the first access network device. In this implementation, the first access network device determines the second access network device that stores and forwards the first information replied by the core network device, and then indicates, to the terminal device, the first identifier used to identify the second access network device, so that the terminal device establishes the connection to the second access network device that stores the first information, to obtain the first information replied by the core network device, and help the terminal device complete a procedure of accessing the core network.

It may be considered that the first access network device sends the first identifier to the terminal device, to indicate, to the terminal device, the second access network device to which a connection needs to be established, or indicate, to the terminal device, the second access network device that stores the first information replied by the core network.

Optionally, in some implementations, obtaining the first identifier includes: determining the first identifier based on ephemeris information.

For example, the terminal device determines the first identifier based on the ephemeris information and at least one of the following information: a location of the terminal device and current time.

With reference to the first aspect, in a possible implementation, after the terminal device determines the first identifier, the terminal device may further send the first identifier to the first access network device, to send the first identifier to the core network device through the first access network device.

In this technical solution, after determining the first identifier of the second access network device used for storage and forwarding, the terminal device sends the first identifier to the core network device through the first access network device, so that the core network device determines the second access network device that stores and forwards the first information replied by the core network device. This ensures that an access network device that receives the first information of the core network device and an access network device to which the terminal device establishes a connection are a same access network device, and ensures that the terminal device can obtain the first information replied by the core network device after establishing the connection. In other words, when the terminal device sends the first identifier to the first access network device, it may be considered that the first identifier indicates the second access network device that sends the first information.

With reference to the first aspect, in a possible implementation, the method further includes: establishing a connection to a third access network device; and if the first information sent by the third access network device is not received in second duration, releasing the connection to the third access network device.

In this embodiment, the third access network device may be considered as an access network device that does not store the first information replied by the core network device.

In this technical solution, if the terminal device further receives a broadcast message from the third access network device, the terminal device further establishes the connection to the third access network device. Correspondingly, the third access network device does not send the first information to the terminal device because the third access network device does not store the first information replied by the core network device. Therefore, in this technical solution, after the terminal device does not receive, in the second duration, the first information sent by the third access network device, the terminal device may determine that the third access network device does not store the first information replied by the core network device, and then release the connection to the third access network device.

Optionally, the terminal device may send third information to the third access network device, where the third information indicates the third access network device to send the information replied by the core network device to the terminal device; receive fourth information sent by the third access network device in response to the third information, where the fourth information indicates the terminal device to release the connection to the third access network device; and release the connection to the third access network device.

In this technical solution, the terminal device explicitly indicates, to the third access network device by using the third information, information that needs to be replied by the core network device to the terminal device. Correspondingly, after determining that the first information is not stored, the third access network device indicates the terminal device to release the connection to the third access network device.

With reference to the first aspect, in a possible implementation, the method further includes: sending fifth information to the second access network device, where the fifth information indicates the second access network device to send the information replied by the core network device to the terminal device.

In this technical solution, the terminal device explicitly indicates, to the second access network device by using the fifth information, the information that needs to be replied by the core network device to the terminal device. Correspondingly, the second access network device sends, to the second access network device in response to the fifth information, the first information that is replied by the core network device to the terminal device.

According to a second aspect, this application provides a communication method, applied to a first access network device, including: receiving a first request, where the first request indicates that a terminal device requests to access a core network; sending second information to the terminal device, where the second information indicates first duration, the terminal device establishes a connection to a second access network device after the first duration ends, and the second access network device is configured to store first information replied by a core network device to the terminal device in response to the first request; and sending the first request to the core network device.

When establishing the connection to the second access network device after the first duration ends, the terminal device further sends an identifier of the terminal device to the second access network device.

It should be noted that, that the second access network device is configured to store the first information replied by the core network device to the terminal device in response to the first request does not indicate that the second access network device has stored the first information. For example, the second access network device may store the first information after the first access network device sends the second information to the terminal device.

In this technical solution, the first access network device determines the second access network device that stores and forwards the first information replied by the core network device, and then indicates the first duration to the terminal device, so that the terminal device establishes the connection to the second access network device that stores the first information, to obtain the first information replied by the core network device, and help the terminal device complete a procedure of accessing the core network.

With reference to the second aspect, in a possible implementation, the second access network device and the first access network device are a same access network device, or the second access network device and the first access network device are different access network devices.

With reference to the second aspect, in a possible implementation, when the second access network device and the first access network device are different access network devices, the method further includes: sending an identifier of the second access network device to the core network device.

With reference to the second aspect, in a possible implementation, the first duration is determined by the first access network device based on ephemeris information.

For example, the first access network device determines the first duration based on the ephemeris information and at least one of the following information: a satellite location, a location of the terminal device, and current time.

With reference to the second aspect, in a possible implementation, when the second access network device is the first access network device, the method further includes: receiving fifth information from the terminal device, where the fifth information indicates to send the information replied by the core network device to the terminal device.

According to a third aspect, this application provides a communication method, applied to a first access network device, including: receiving a first request, where the first request indicates that a terminal device requests to access a core network; sending a first identifier to the terminal, where the first identifier is used to identify a second access network device, and the second access network device is configured to store first information replied by a core network device to the terminal device in response to the first request; and sending the first request to the core network device.

In this technical solution, the first access network device determines the second access network device that stores and forwards the first information replied by the core network device, and then indicates, to the terminal device, the first identifier used to identify the second access network device, so that the terminal device establishes a connection to the second access network device that stores the first information, and sends an identifier of the terminal device to the second access network device, to obtain the first information replied by the core network device, and help the terminal device complete a procedure of accessing the core network.

With reference to the third aspect, in a possible implementation, the method further includes: sending the first identifier to the core network device, where the first identifier is used by the core network device to determine to send the first information to the terminal device through the second access network device.

With reference to the third aspect, in a possible implementation, the second access network device and the first access network device are a same access network device, or the second access network device and the first access network device are different access network devices.

With reference to the third aspect, in a possible implementation, when the second access network device and the first access network device are a same access network device, the method further includes: receiving fifth information from the terminal device, where the fifth information indicates to send the information replied by the core network device to the terminal device.

According to a fourth aspect, this application provides a communication method, applied to a core network device, including: receiving a first request sent by a first access network device, where the first request indicates that a terminal device requests to access a core network; and sending first information to a second access network device, where the first information is information replied by the core network device to the terminal device in response to the first request, and the second access network device is determined in any one of the following manners: the second access network device is indicated by the first access network device to the core network device, indicated by the terminal device to the core network device, or determined by the core network device based on ephemeris information.

With reference to the fourth aspect, in a possible implementation, the method further includes: indicating the second access network device to delete the stored first information after third duration.

With reference to the fourth aspect, in a possible implementation, the second access network device and the first access network device are a same access network device, or the second access network device and the first access network device are different access network devices.

With reference to the fourth aspect, in a possible implementation, the method further includes: indicating a location of the terminal device to the second access network device. In this technical solution, the core network device indicates the location of the terminal device to the second access network device, so that the second access network device can send a broadcast message only when covering the terminal device, so that the terminal device detects the second access network device.

According to a fifth aspect, this application provides a communication method, applied to a terminal device, including: sending a first request to a first access network device, where the first request indicates that the terminal device requests to access a core network; obtaining, from the first access network device or locally, indication information that indicates the terminal device to access a second access network device; establishing, by the terminal device, a connection to the second access network device based on the indication information, and sending an identifier of the terminal device to the second access network device; and receiving first information from the second access network device, where the first information is information replied by the core network to the terminal device in response to the first request, and the first information corresponds to the identifier of the terminal device.

With reference to the fifth aspect, in a possible implementation, the second access network device and the first access network device are a same access network device, or the second access network device and the first access network device are different access network devices.

With reference to the fifth aspect, in a possible implementation, the indication information is first duration obtained from the first access network device, and establishing, by the terminal device, the connection to the second access network device based on the indication information includes: establishing the connection to the second access network device after the first duration.

With reference to the fifth aspect, in a possible implementation, the first duration is determined by the first access network device based on ephemeris information.

With reference to the fifth aspect, in a possible implementation, the indication information is a first identifier sent by the first access network device, and the first identifier is used to identify the second access network device that stores the first information replied by a core network device.

With reference to the fifth aspect, in a possible implementation, the indication information is a first identifier locally determined by the terminal device based on ephemeris information, and the first identifier is used to identify the second access network device that stores the first information replied by a core network device.

According to a sixth aspect, this application provides a communication method, applied to a second access network device, including: receiving first information from a core network device, where the first information is information replied by a core network to a terminal device in response to a first request, the first request indicates that the terminal device requests to access the core network, and the first information corresponds to an identifier of a first terminal device; and receiving the identifier of the first terminal device, and sending the first information to the terminal device that sends the identifier of the first terminal device.

With reference to the sixth aspect, in a possible implementation, the identifier of the first terminal device is sent by the core network device to the second access network device.

The identifier of the first terminal device is used to identify, in an initial access procedure, the terminal device that sends the first request. For example, the identifier of the first terminal device may be an international mobile subscriber identity (international mobile subscriber identification, IMSI), a subscription permanent identifier (subscription permanent identifier, SUPI), a subscription concealed identifier (subscription concealed identifier, SUCI), a globally unique temporary identity (globally unique temporary identification, GUTI), a temporary mobile subscriber identity (temporary mobile subscriber identity, TMSI), a cell radio network temporary identifier (cell radio network temporary identifier, C-RNTI), an inactive radio network temporary identifier (inactive radio network temporary identifier, I-RNTI), or the like.

According to a seventh aspect, this application provides a communication apparatus, to implement the method according to any one of the first aspect to the sixth aspect and the possible implementations of the first aspect to the sixth aspect. The apparatus includes a corresponding module configured to perform the method. The module included in the apparatus may be implemented by software and/or hardware.

According to an eighth aspect, this application provides a communication apparatus. The apparatus includes a processor, and the processor may be configured to execute a computer program in a memory, to implement the method according to any one of the first aspect to the sixth aspect and the possible implementations of the first aspect to the sixth aspect.

Optionally, the apparatus further includes a communication interface, and the processor is coupled to the communication interface. The communication interface is configured to receive a signal from a communication apparatus other than the apparatus and transmit the signal to the processor, or send a signal from the processor to a communication apparatus other than the apparatus. For example, the communication interface may be a transceiver, a circuit, a bus, a module, a pin, or a communication interface of another type.

Optionally, the apparatus further includes the memory, and the processor is coupled to the memory. The memory is configured to store program instructions and data. The memory is coupled to the processor. When the processor executes the instructions stored in the memory, the method described in the foregoing aspects may be implemented.

According to a ninth aspect, this application provides a communication apparatus, including a processor and a communication interface. The communication interface is configured to: receive a signal from a communication apparatus other than the communication apparatus and transmit the signal to the processor, or send a signal from the processor to a communication apparatus other than the communication apparatus. The processor implements the method in any one of the first aspect to the fifth aspect and the possible implementations of the first aspect to the fifth aspect by using a logic circuit or executing code instructions. For example, the communication interface may be a transceiver, a circuit, a bus, a module, a pin, or a communication interface of another type.

Optionally, the apparatus may further include a memory, configured to store instructions and data. The memory may be coupled to the processor, and when executing the instructions stored in the memory, the processor implements the method according to any one of the first aspect to the sixth aspect and the possible implementations of the first aspect to the sixth aspect.

According to a tenth aspect, this application provides a communication apparatus, including a processor and a memory. The memory is configured to store instructions and data. When executing the instructions stored in the memory, the processor may implement the method in any one of the first aspect to the sixth aspect and the possible implementations of the first aspect to the sixth aspect.

Optionally, the apparatus further includes a communication interface. The communication interface is used by the apparatus to communicate with another communication apparatus. For example, the communication interface may be a transceiver, a circuit, a bus, a module, a pin, or another type of communication interface.

According to an eleventh aspect, this application provides a computer-readable storage medium. The computer-readable storage medium stores a computer program or instructions. When the computer program or the instructions are executed, the method according to any one of the first aspect to the sixth aspect and the possible implementations of the first aspect to the sixth aspect is implemented.

According to a twelfth aspect, this application provides a computer program product. The computer program product includes instructions. When the instructions are run, the method according to any one of the first aspect to the sixth aspect and the possible implementations of the first aspect to the sixth aspect is implemented.

According to a thirteenth aspect, this application provides a chip system. The chip system includes at least one processor, configured to support implementation of a function in any one of the first aspect to the fifth aspect and the possible implementations of the first aspect to the sixth aspect, for example, receiving or processing data in the foregoing methods.

In a possible design, the chip system further includes a memory, the memory is configured to store program instructions and data, and the memory is located inside or outside the processor.

The chip system may include a chip, or may include a chip and another discrete component.

It may be understood that, for effects that can be obtained in the second aspect to the eleventh aspect, refer to the descriptions in the first aspect. Details are not described herein.

### BRIEF DESCRIPTION OF DRAWINGS

FIG. 1 is a satellite network architecture with a transparent payload according to this application;
FIG. 2 is a satellite network architecture with a regenerative payload according to this application;
FIG. 3 is a diagram of a service link and a feeder link when a satellite moves according to this application;
FIG. 4 is an existing schematic flowchart of accessing a core network by a terminal device according to this application;
FIG. 5 is a diagram of a process in which a terminal device in 4G establishes a connection to a core network according to this application;
FIG. 6 is a diagram of a process in which a terminal device in 5G establishes a connection to a core network according to this application;
FIG. 7 is a schematic flowchart of a communication method according to an embodiment of this application;
FIG. 8 is a flowchart of an example of a communication method according to an embodiment of this application;
FIG. 9 is a schematic flowchart of a communication method according to an embodiment of this application;
FIG. 10 is a flowchart of an example of a communication method according to an embodiment of this application;
FIG. 11 is a schematic flowchart of a communication method according to an embodiment of this application;
FIG. 12A and FIG. 12B are a flowchart of an example of a communication method according to an embodiment of this application;
FIG. 13 is a schematic flowchart of a communication method according to an embodiment of this application;
FIG. 14 is a flowchart of an example of a communication method according to an embodiment of this application;
FIG. 15 is a schematic flowchart of a communication method according to an embodiment of this application;
FIG. 16 is a diagram of a structure of a communication apparatus according to an embodiment of this application; and
FIG. 17 is a diagram of a structure of a communication apparatus according to an embodiment of this application.

### DESCRIPTION OF EMBODIMENTS

The following describes technical solutions of this application with reference to accompanying drawings.

Before the methods provided in embodiments of this application are described, the following descriptions are first provided.

First, in this application, an indication includes an explicit indication (also referred to as a direct indication) and an implicit indication (also referred to as an indirect indication). The explicit indication of information A means that the information A is included. The implicit indication of information A means that the information A is indicated by using a correspondence between the information A and information B and directly indicating the information B. The correspondence between the information A and the information B may be predefined, pre-stored, pre-burned, or preconfigured. Alternatively, the information A may be indicated by using the information B and a preset rule.

Second, in this application, that information C is used to determine information D includes that the information D is determined based only on the information C, and also includes that the information D is determined based on the information C and other information. In addition, that the information C is used to determine the information D may further include an indirect determining case. For example, the information D is determined based on information E, and the information E is determined based on the information C.

Third, in this application, "at least one" means one or more, and "a plurality of" means two or more. A term "and/or" describes an association relationship between associated objects, and indicates that three relationships may exist. For example, A and/or B may represent the following three cases: only A exists, both A and B exist, and only B exists, where A and B may be singular or plural. The character "/" usually indicates an "or" relationship between associated objects, but does not exclude an "and" relationship between the associated objects. A specific indicated meaning may be understood with reference to the context. "At least one of the following items (pieces)" or a similar expression thereof means any combination of these items, including a single item (piece) or any combination of a plurality of items (pieces). For example, at least one of a, b, or c may represent a, b, c, a and b, a and c, b and c, or a, b, and c. a, b, and c each may be singular or plural.

Fourth, in this application, prefix words such as "first" and "second" are merely used for distinguishing and describing different things belonging to a same name category, and are not intended to constrain a sequence, sizes, or a quantity of things. For example, a "first message" and a "second message" may be different messages, or may be a same message. This is not limited in this application.

Fifth, "sending" and "receiving" in this application indicate a signal transmission direction. "Sending" may also be understood as "outputting" of a chip interface, and "receiving" may also be understood as "inputting" of the chip interface.

In other words, sending and receiving may be performed between devices, for example, between a terminal device and a first access network device, or may be performed in a device, for example, sending or receiving is performed between components, modules, chips, software modules, or hardware modules in the device by using a bus, a cable, or an interface.

Sixth, in this application, "when" and "if" mean that an apparatus performs corresponding processing in an objective situation, and are not intended to limit time. The terms do not mean that the apparatus is required to have a determining action during implementation, and do not mean any other limitation.

Seventh, in this application, the word "example", "an example", "in an example", or "for example" is used to give an example, an illustration, or a description. Any embodiment or design solution described as "example", "an example", "in an example", "for example" in this application should not be explained as being more preferred or having more advantages than another embodiment or design solution. Specifically, the use of words such as "example", "an example", "in an example", "for example" is intended to present a related concept in a specific manner.

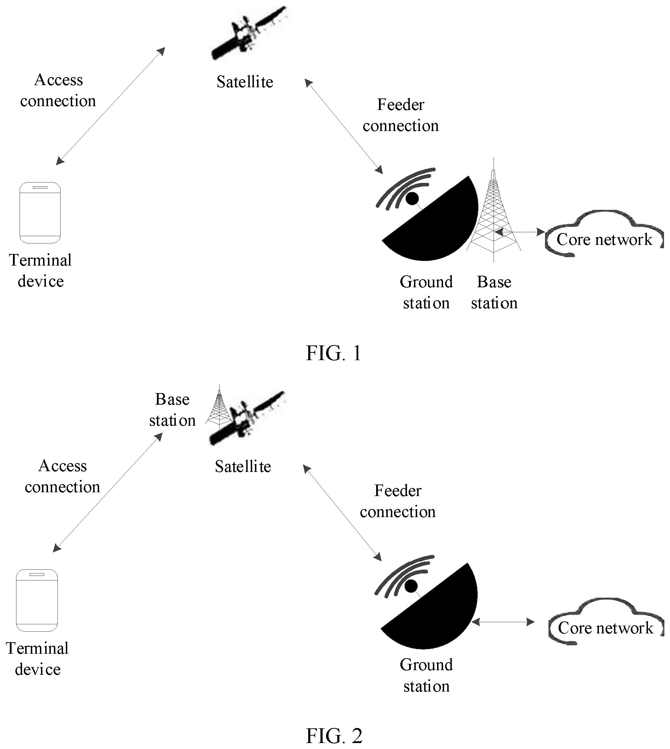

With the development of communication technology, a non-terrestrial network (non-terrestrial network, NTN) has become a research hotspot. For example, FIG. 1 and FIG. 2 are diagrams of two network architectures of an NTN according to an embodiment of this application. FIG. 1 is a diagram of a satellite network architecture with a transparent payload, and FIG. 2 is a diagram of a satellite network architecture with a regenerative payload.

As shown in FIG. 1, the satellite network architecture with a transparent payload includes a terrestrial mobile terminal (referred to as a terminal device below), a satellite, a ground station deployed on the ground, a base station deployed on the ground, and a core network. The terminal device accesses the core network through the satellite, the ground station, and the base station deployed on the ground.

As shown in FIG. 2, the satellite network architecture of a regenerative payload includes a terminal device, a satellite, a base station deployed on the satellite, a ground station, and a core network. The terminal device accesses the core network through the base station deployed on the satellite and the ground station deployed on the ground. The ground station may also be referred to as a gateway station. In other words, in the satellite network architecture with a regenerative payload, the satellite has all or a part of functions of a base station.

Generally, in the satellite network architecture with a regenerative payload, a connection between the terminal device and the base station is also referred to as a service link, and a connection between the base station and the ground station is also referred to as a feeder link.

It should be noted herein that specific forms of the terminal device and the base station are not limited in this application.

In embodiments of this application, the terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data, for example, a handheld device or a vehicle-mounted device with a wireless connection function. Currently, some examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a wearable device, a terminal device in a 5G network, a terminal device in a future evolved public land mobile communication network (public land mobile network, PLMN), or the like. This is not limited in embodiments of this application.

By way of example, but not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In embodiments of this application, an apparatus configured to implement a function of the terminal device may be the terminal device, or may be an apparatus that can support the terminal device in implementing the function, such as a chip system, where the apparatus may be installed in the terminal device or used in matching with the terminal device. In embodiments of this application, the chip system may include a chip, or may include a chip and another discrete component. In embodiments of this application, only an example in which the apparatus configured to implement the function of the terminal device is a terminal device is used for description, and constitutes no limitation on the solutions in embodiments of this application.

The base station in embodiments of this application may be a device configured to communicate with a terminal device, and the base station may also be referred to as an access network device or a radio access network device. In embodiments of this application, the base station may be a radio access network (radio access network, RAN) node (or device) that connects the terminal device to a wireless network. The base station may cover the following names in a broad sense, or may be replaced with the following names, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary station, a secondary station, a multi-standard radio (multi-standard radio, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), and a positioning node. The base station may be a macro base station, a micro base station, a relay node, a donor node, or the like, or a combination thereof. The base station may alternatively be a communication module, a modem, or a chip arranged in the foregoing device or apparatus. The base station may alternatively be a mobile switching center, a device that bears a base station function in D2D, V2X, or M2M communication, a network-side device in a future communication network, a device that bears a base station function in a future communication system, or the like. The base station may support networks using a same access technology or different access technologies. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU). A specific technology and a specific device form that are used by the network device are not limited in embodiments of this application. In some deployments, the network device mentioned in embodiments of this application may be a device including a CU or a DU, a device including a CU and a DU, or a device including a control plane CU node (a central unit-control plane (central unit-control plane, CU-CP)), a user plane CU node (a central unit-user plane (central unit-user plane, CU-UP)), and a DU node. For example, the network device may include a gNB-CU-CP, a gNB-CU-UP, and a gNB-DU.

In some deployments, a plurality of RAN nodes cooperate to assist a terminal in implementing radio access, and different RAN nodes respectively implement some functions of the base station. For example, the RAN node may be a CU, a DU, a CU-CP, a CU-UP, or an RU. The CU and the DU may be separately disposed, or may be included in a same network element, for example, a BBU. The RU may be included in a radio frequency device or a radio frequency unit, for example, included in an RRU, an AAU, or an RRH.

The RAN node may support one or more types of fronthaul interfaces, and different fronthaul interfaces respectively correspond to DUs and RUs having different functions. If a fronthaul interface between the DU and the RU is a common public radio interface (common public radio interface, CPRI), the DU is configured to implement one or more baseband functions, and the RU is configured to implement one or more radio frequency functions. If the fronthaul interface between the DU and the RU is another type of interface, in comparison with the CPRI, a part of downlink and/or uplink baseband functions are moved from the DU to the RU for implementation. For example, for downlink, one or more of precoding (precoding), digital beamforming (beamforming, BF), or inverse fast Fourier transform (inverse fast Fourier transform, IFFT)/cyclic prefix (cyclic prefix, CP) addition are moved from the DU to the RU for implementation; and for uplink, one or more of digital beamforming (beamforming, BF) or fast Fourier transform (fast Fourier transform, FFT)/cyclic prefix (cyclic prefix, CP) removal are moved from the DU to the RU for implementation. In a possible implementation, the interface may be an enhanced common public radio interface (enhanced common public radio interface, eCPRI). In an eCPRI architecture, split manners between the DU and RU are different, which correspond to different categories (categories, Cats) of eCPRIs, such as eCPRI Cats A, B, C, D, E, and F.

In a possible design, a processing unit for implementing a baseband function in the BBU is referred to as a baseband high (baseband high, BBH) unit, and a processing unit for implementing a baseband function in the RRU/AAU/RRH is referred to as a baseband low (baseband low, BBL) unit.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any unit of the CU (or the CU-CP or the CU-UP), the DU, and the RU in this application may be implemented by using a software module, a hardware module, or a combination of a software module and a hardware module.

A core network side in embodiments of this application may include a user plane function (user equipment, UPF) of a data plane and a core network control plane. The UPF is a functional unit of a user plane, and is mainly responsible for data packet forwarding, quality of service (quality of service, QoS) control, charging information statistics collection, a connection to an external network, and the like. The UPF includes related functions of a serving gateway (serving gateway, SGW) and a public data network gateway (public data network gateway, PDN-GW) of a long term evolution (long term evolution, LTE) technology. The core network control plane is mainly responsible for business procedure interaction, delivering a data packet forwarding policy and a QoS control policy, and the like to the user plane, and the like. For example, control plane network elements in the core network control plane mainly include a mobility management function (access and mobility function, AMF), a session management function (session management function, SMF), a policy control function (policy control function, PCF), an application function (application function, AF), and a network exposure function (network exposure function, NEF). For functions of the network elements, refer to descriptions in a related technology. Details are not described herein. In addition, it should be noted herein that the network elements in embodiments of this application may be the network elements mentioned in the foregoing embodiments, or may be network elements having a same function as the foregoing network elements. For example, the application function network element may be an AF network element, or may be a network element having a same function as the AF network element. The policy management network element may be a PCF network element, or may be a network element having a same function as the PCF network element.

In embodiments of this application, an apparatus configured to implement a function of a base station may be a base station, or may be an apparatus that can support the base station in implementing the function, for example, a chip system, a hardware circuit, a software module, or a hardware circuit and a software module. The apparatus may be installed in the base station or used in a matching manner with the base station. In embodiments of this application, only the base station is used as an example for description, and the solutions in embodiments of this application are not limited.

It may be understood that, in a satellite network architecture with a regenerative payload, a satellite is mobile. Therefore, a service link between a terminal device and a base station deployed on the satellite may be disconnected, which is also referred to as a case of an unavailable service link, or a feeder link between the base station deployed on the satellite and a ground station may be disconnected, which is also referred to as a case of an unavailable feeder link.

In embodiments of this application, that the service link is unavailable may also be understood as: The terminal device is not in coverage of the base station deployed on the satellite, and the base station deployed on the satellite cannot receive a signal sent by the terminal device to the base station, or the terminal device cannot receive a signal sent by the base station deployed on the satellite. On the contrary, that the service link is available may be understood as: The terminal device is in coverage of the base station deployed on the satellite, and the base station deployed on the satellite can receive a signal sent by the terminal device, or the terminal device can receive a signal sent by the base station deployed on the satellite.

In embodiments of this application, that the feeder link is unavailable may be understood as: The ground station cannot receive a signal sent by the base station deployed on the satellite to the ground station, or the satellite cannot receive a signal sent by the ground station to the base station deployed on the satellite, or information (including control plane signaling and a user plane data packet) cannot be sent between the base station and a core network device. On the contrary, that the feeder link is available may be understood as: The ground station can receive a signal sent by the base station deployed on the satellite, or the base station deployed on the satellite can receive a signal sent by the ground station, or information (including control plane signaling and a user plane data packet) can be sent between the base station and the core network device.

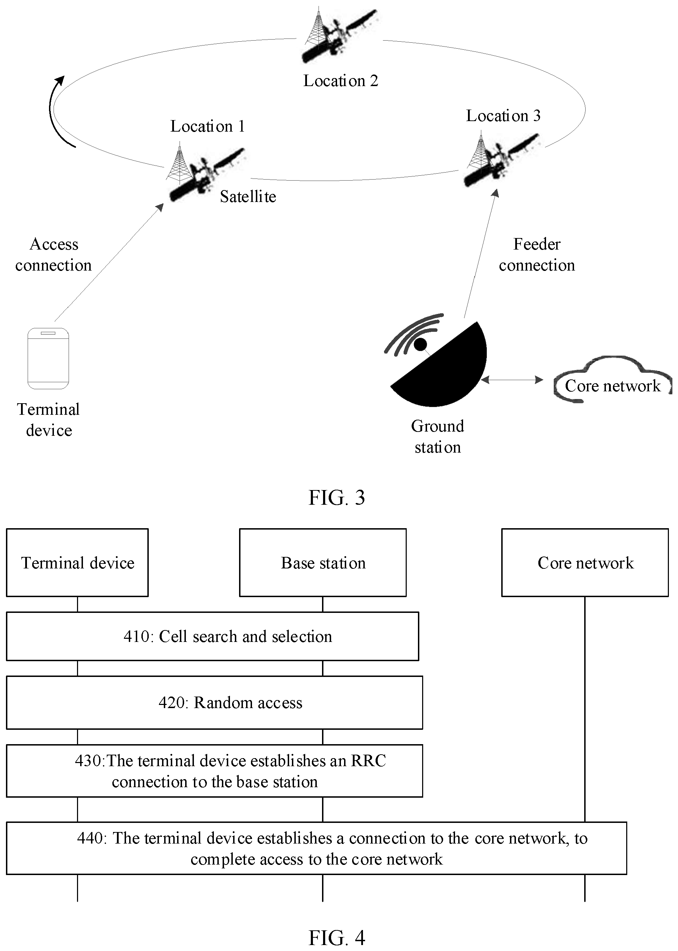

For example, as shown in FIG. 3, when a satellite on which a base station is deployed is at a location 1, a service link between a terminal device and the base station is available. When the satellite moves to a location 2, both the service link between the terminal device and the base station and a feeder link between the base station and a ground station are unavailable. When the satellite moves to a location 3, the feeder link between the base station and the ground station is available.

For ease of description, the base station deployed on the satellite is referred to as a base station for short. That is, the base station in the following is specifically a base station deployed on a satellite.

In other words, in the satellite network architecture with a regenerative payload, the feeder link between the base station and the ground station does not always exist, or the feeder link between the base station and the ground station is not always available, or the connection between the terminal device and the base station does not always exist, or the service linkservice link between the terminal device and the base station is not always available.

Further, it is possible that the service link and the feeder link cannot be simultaneously available. In this case, the following problem occurs: In a procedure of initially accessing a core network by the terminal device, after the terminal device sends an initial access request used to request to access the core network, the terminal device is disconnected from a current base station before receiving a response message from the core network. That is, the terminal device is disconnected from the current base station before completing a procedure of accessing the core network. In embodiments of this application, the request used to request to access the core network is also referred to as an initial access request or an initial network access request, and does not constitute a limitation on this application.

For example, when the terminal sends the initial access request to the base station, the feeder link between the base station and the ground station is unavailable, and the base station needs to send the initial access request to the core network only when the feeder link is available, so that the core network device determines, based on first information, information replied to the terminal device. However, when the feeder link is available, the service link between the terminal device and the current base station may be unavailable.

In this case, in this scenario, how to ensure that the terminal can receive the information replied by the core network device to the terminal, to complete network access of the terminal device becomes an urgent technical problem to be resolved.

With reference to the accompanying drawings, the following describes a communication method provided in this application, so that in a scenario in which the terminal device is disconnected from the current base station before accessing the core network, the terminal device receives a response message sent by the core network device to the terminal, to complete network access of the terminal device.

Before the communication method provided in this application is described in detail, the following first explains in detail a procedure in which the terminal device accesses the core network with reference to FIG. 4 to FIG. 6. The procedure in which the terminal device accesses the core network is also referred to as a network access procedure of the terminal device.

FIG. 4 is an existing schematic flowchart of accessing a core network by a terminal device according to an embodiment of this application. The method shown in FIG. 4 includes step 410 to step 440. The steps in FIG. 4 are described in detail below.

Step 410: The terminal device first performs cell search and selection when accessing a network.

Cell search is that the terminal device detects a broadcast message of a base station, including a physical cell identifier (physical cell identifier, PCI), a master information block (master information block, MIB), and a system information block (system information block)/system information broadcast (system information broadcast). The PCI is used to determine a cell, and the PCI, the MIB, and the system information block/system information broadcast are combined as information necessary for the terminal device to camp on a cell and trigger initial access.

After cell search is completed, the terminal device selects a PLMN cell, and the terminal device implements downlink synchronization with the cell.

Step 420: The terminal device performs random access.

Random access is used to implement uplink synchronization with the cell.

For example, in this process, the base station allocates, to the terminal device, an uplink resource used to send an RRC setup request (RRC Setup Request), and the terminal device can initiate uplink transmission only after obtaining the uplink resource.

Step 430: After the terminal device successfully performs random access, the terminal device establishes an RRC connection to the base station.

For example, the terminal device sends an RRC setup request to the base station on a signaling radio bearer (signaling radio bearer, SRB) 0 (SRB0). After receiving the RRC setup request, the base station sends RRC setup (RRC Setup) to the terminal device, where the RRC setup carries detailed information about an SRB 1 resource configuration. After receiving the RRC setup, the terminal device sends RRC setup complete (RRC SetupComplete) to the base station, to indicate that the terminal device successfully establishes the RRC connection to the base station.

The SRB 0 does not need to be established and always exists. The SRB0 is used to carry RRC signaling before the RRC connection is successfully established, and is transmitted through a CCCH logical channel.

An SRB 1 is used to carry RRC signaling after the RRC connection is successfully established and non-access stratum (non-access stratum, NAS) signaling before an SRB 2 is established, and is transmitted through a DCCH logical channel. The SRB 2 is used to carry NAS signaling and is transmitted through the DCCH logical channel. A priority of the SRB 2 is lower than that of the SRB 1. The SRB 2 can be established only after a security mode is activated. The SRB 2 is established through RRC reconfiguration. The NAS signaling is signaling for transmitting information between the terminal device and a core network element. The base station is only responsible for forwarding the signaling. The signaling is above an RRC layer. That is, the NAS signaling can be sent only after the RRC connection is successfully established.

That is, an objective of establishing the RRC connection is to establish the SRB 1, and then transmit, through the SRB 1, RRC signaling after the RRC connection is successfully established.

After the RRC connection is successfully established, the terminal device and the base station each store an RRC context, including an identifier of the terminal device, for example, a cell radio network temporary identifier (cell radio network temporary identifier, C-RNTI) and resource information of an SRB.

Step 410 to step 430 may also be referred to as a procedure of accessing the base station by the terminal device. In other words, the procedure of accessing the base station by the terminal device includes cell selection, random access, and RRC connection establishment.

Step 440: The terminal device establishes a connection to the core network, to complete access to the core network.

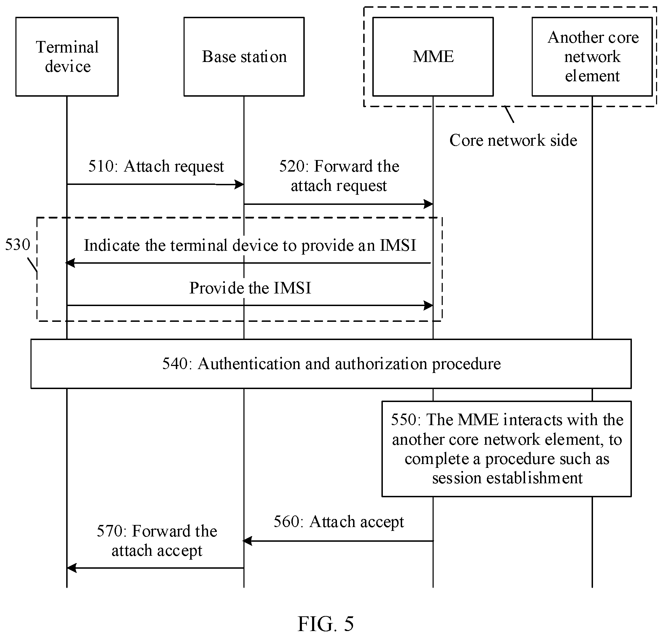

For example, in 4G, a procedure in which the terminal device establishes a connection to the core network is shown in FIG. 5. In 4G, a procedure in which the terminal device establishes a connection to the core network is also referred to as an attach (Attach) procedure.

As shown in FIG. 5, a procedure in which the terminal device establishes a connection to the core network in 4G includes step 510 to step 570.

Step 510: The terminal device sends attach request (Attach Request) information to the base station, to request to access the core network.

Optionally, the attach request information may include: an SUCISUCI, a globally unique temporary identity (globally unique temporary identification, GUTI), an attach type (Attach Type), an ESM message container (ESM message container), and.

Step 520: The base station forwards the attach request information to an MME.

Optionally, when the attach request is forwarded to the MME, a selected public land mobile network (public land mobile network, PLMN), tracking area identity (tracking area identity, TAI), and cell global identifier (ECGI) are further indicated to the MME.

Step 530: The MME indicates the terminal device to provide an IMSI. Correspondingly, the terminal device provides the IMSI.

If the MME knows the GUTI provided by the terminal device, this step may not be performed. That is, this step is optional.

Step 540: The terminal device, the base station, the MME, and another core network element perform an authentication and authorization procedure.

Step 550: The MME interacts with the another core network element to complete a procedure such as session establishment.

Step 560: The MME sends attach accept (Attach accept) information to the base station through a downlink NAS transport (Downlink NAS transport) message.

The attach accept information indicates that the core network side accepts a network access request of the terminal device, or that the core network side allows the terminal device to access the network.

Optionally, the downlink NAS transport message further includes the GUTI of the terminal device, TAI list information, and session management request information (Session Management Request).

Step 570: The base station forwards the attach accept information to the terminal device.

For detailed content of step 540 to step 570, refer to descriptions in a related technology. Details are not described herein again.

It may be understood that, after receiving the attach accept information sent by the MME, the terminal device replies an initial access complete message to the MME through the base station. After the MME receives the message and performs an action such as configuration bearer, an initial access procedure is completed.

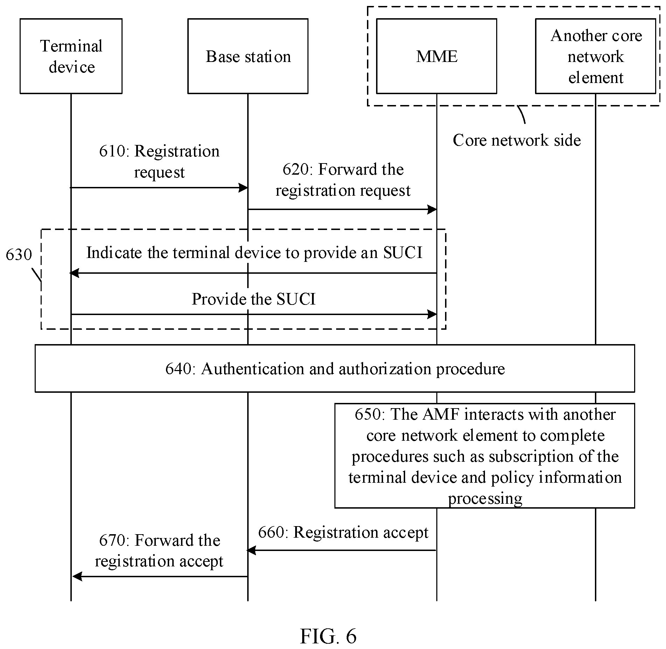

For example, FIG. 6 shows an existing procedure of establishing a connection between a key device and a core network in 5G according to this application. In 5G, a procedure in which a terminal device establishes a connection to the core network is also referred to as a registration (Registration) procedure.

As shown in FIG. 6, a procedure in which the terminal device establishes a connection to the core network in 5G includes step 610 to step 670.

Step 610: The terminal device sends a registration request (Registration Request) to a base station, to request to access the core network.

Optionally, the registration request may include a 5G-S-TMSI, an identifier of a selected PLMN, and network slice selection assistance information (network slice selection assistance information, NSSAI).

Step 620: The base station forwards the registration request to an MME.

Optionally, when the attach request is forwarded to the MME, the identifier of the selected PLMN, location information (Location information) of the terminal device, and a cell identity (Cell identification) are further indicated to the MME.

Step 630: The AMF indicates the terminal device to provide a GUTI. Correspondingly, the terminal device provides the SUCI.

If the MME knows the GUTI provided by the terminal device, this step may not be performed. That is, this step is optional.

Step 640: The terminal device, the base station, the AMF, and another core network element perform an authentication and authorization procedure.

Step 650: The AMF interacts with the another core network element to complete procedures such as subscription of the terminal device and policy information processing.

Step 660: The AMF sends registration accept (Registration accept) information to the base station.

The registration accept information indicates that the core network side accepts a network access request of the terminal device, or that the core network side allows the terminal device to access the network.

Optionally, when the registration accept information is sent, a 5G-GUTI, a registration area, and an allowed NSSAI of the terminal device may be further indicated to the base station.

Step 670: The base station forwards the registration accept information to the terminal device.

For detailed content of step 640 to step 670, refer to descriptions in a related technology. Details are not described herein again.

It may be understood that, after receiving the registration accept information sent by the AMF, the terminal device replies an initial access complete message to the AMF through the base station. After the AMF receives the message and performs an action such as configuration bearer, an initial access procedure is completed.

The following describes a communication method provided by this application in detail. The communication method may also be referred to as a network access method of a terminal device.

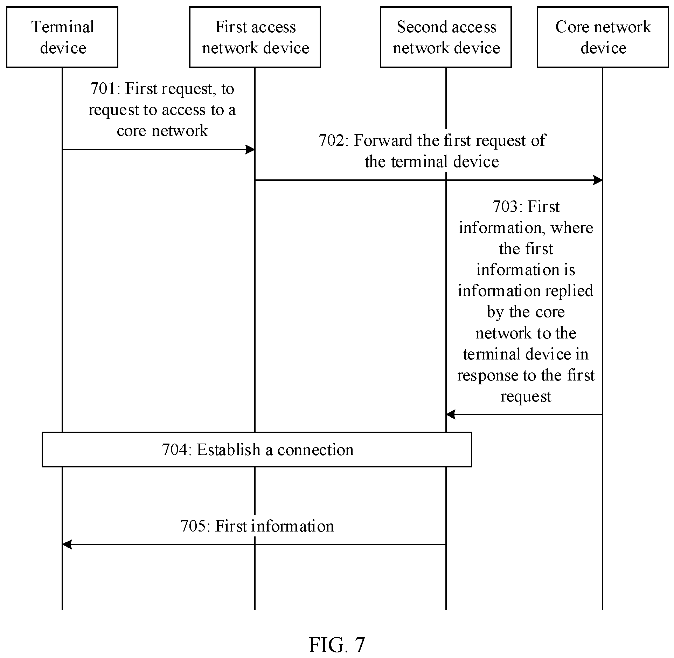

FIG. 7 is a schematic flowchart of a communication method according to an embodiment of this application. FIG. 7 describes the method only from a perspective of interaction between a terminal device, a first access network device, a second access network device, and a core network device, and should not constitute any limitation on this application.

For example, the terminal device in FIG. 7 may be replaced with a component (for example, a chip, a chip system, or a processor) configured in the terminal device, or a logical module or software that can implement all or a part of functions of the terminal device. The first access network device may be replaced with a component (for example, a chip, a chip system, or a processor) configured in the first access network device, or software that can implement all or a part of functions of the first access network device. The second access network device may be replaced with a component (for example, a chip, a chip system, or a processor) configured in the second access network device, or software that can implement all or a part of functions of the second access network device. The core network device may be replaced with a component (for example, a chip, a chip system, or a processor) configured in the core network device, or may be a logical module or software that can implement all or a part of functions of the core network device.

The method shown in FIG. 7 includes step 701 to step 705. The following describes in detail steps of the method shown in FIG. 7.

Step 701: The terminal device sends a first request to the first access network device, where the first request indicates that the terminal device requests to access a core network; and the first access network device receives the first request.

In this embodiment, the first request indicates that the terminal device is to access the core network. The first request may also be referred to as an initial access request or an initial network access request.

Specifically, in this embodiment, the terminal device sends the first request to the first access network device when a service link between the terminal device and the first access network device is available.

For example, the first request may be an attach request in a 4G communication system.

For example, the first request may be a registration request in a 5G communication system.

It may be understood that the attach request and the registration request are merely used as examples herein, and should not constitute a limitation on this application. For example, the first request may also be a request sent by the terminal device in a future communication system. As long as the request is used by the terminal device to request to access the core network, the request may also be considered as the first request herein.

In addition, it may be understood that in this embodiment, before the terminal device sends the first request, the terminal device needs to first establish a connection to the first access network device, that is, access the first access network device. For content about how to establish a connection to an access network device, refer to descriptions of content in 3GPP TS 38.331, 36.331, or FIG. 4. Details are not described herein again.

Step 702: The first access network device sends the first request of the terminal device to the core network device, and the core network device receives the first request.

That is, after receiving the first request sent by the terminal device, the first access network device forwards the first request to the core network device. In other words, the terminal device sends the first request to the core network device through the first access network device.

In this embodiment, when a feeder link between the first access network device and a ground station is available, the first access network device forwards the first request of the terminal device to the core network device.

In an implementation, after receiving the first request sent by the terminal device, the first access network device sends the first request of the terminal device to the core network device when the feeder link is available, so that the core network device determines the terminal device that requests to access the core network.

For example, when the communication method provided in this application is applied to the 4G communication system, the core network device herein may be an MME.

For example, when the communication method provided in this application is applied to the 5G communication system, the core network device herein may be an AMF.

It may be understood that the AMF and the AMF herein are merely examples, and should not constitute a limitation on this application.

Step 703: The core network device sends first information to the second access network device, where the first information is information replied by the core network device to the terminal device in response to the first request; and the second access network device receives the first information.

In this embodiment, after receiving the first request of the terminal device, the core network device determines the information to be replied to the terminal device, to help the terminal device complete a procedure of accessing the core network through interaction. In this application, the information replied by the core network device to the terminal device is referred to as first information.

For example, the first information may be any one of the following: information that indicates that the terminal device is allowed to access the core network (for example, attach accept or registration accept), an authentication request (authentication request), an N1 message, or a non-access stratum message (NAS message).

In this embodiment, when a feeder link between the second access network device and the ground station is available, the core network device indicates, to the second access network device, the first information replied to the terminal device, to forward, to the terminal device through the second access network device, the information replied by the core network device to the terminal device. In other words, the core network device replies the first information to the terminal device through the second access network device. Alternatively, the second access network device forwards the first information replied by the core network device to the terminal device. Alternatively, the second access network is an access network device that stores the first information replied by the core network device to the terminal device.

Step 704: The terminal device establishes a connection to the second access network device.

It may be understood that when the second access network device needs to reply the first information to the terminal device, it needs to be first ensured that a connection is established between the second access network device and the terminal device. Specifically, connection establishment herein means that the terminal device accesses the second access network device, for example, includes a process in which the terminal device performs cell selection, random access, and RRC connection establishment. In this way, the second access network device can forward, to the terminal device, the first information replied by the core network device to the terminal device.

Therefore, in this embodiment, the terminal device establishes the connection to the second access network device that stores the first information, and sends an identifier of the terminal device to the second access network device. In this way, after the connection is established, the second access network device can determine, based on the identifier of the terminal device, the first information replied by the core network device to the terminal device, and then forward the first information to the terminal device.

In this embodiment of this application, the identifier of the terminal device is used to identify, in an initial access procedure, the terminal device that sends the first request. For example, the identifier of the terminal device may be an international mobile subscriber identity (international mobile subscriber identification, IMSI), a subscription permanent identifier (subscription permanent identifier, SUPI), a subscription concealed identifier (subscription concealed identifier, SUCI), a globally unique temporary identity (globally unique temporary identification, GUTI), a temporary mobile subscriber identity (temporary mobile subscriber identity, TMSI), a cell radio network temporary identifier (cell radio network temporary identifier, C-RNTI), an inactive radio network temporary identifier (inactive radio network temporary identifier, I-RNTI), or the like.

It should be noted herein that how to determine the identifier of the terminal device sent by the terminal device to the second access network device is not limited in this embodiment.

In a first implementation, the terminal device preconfigures or locally determines the identifier of the terminal device, and the terminal device sends the identifier of the terminal device to the second access network device. For example, the terminal device preconfigures the IMSI or the SUPI, or locally determines the SUCI as the identifier of the terminal device, and then sends the identifier of the terminal device to the first access network device in step 701, and sends the identifier of the terminal device to the second access network device in step 704. Optionally, in the first implementation, the first access network device may send the identifier of the terminal device to the core network in step 702.

In a second implementation, the identifier of the terminal device sent by the terminal device may be allocated by the first access network device.

Optionally, in an implementation solution (a) of the second implementation, after receiving the first request in step 701, the first access network device allocates the identifier of the terminal device to the terminal device, and sends the identifier of the terminal device to the terminal device, for example, the C-RNTI, the I-RNTI, a combination of the C-RNTI and a RAN identifier, a combination of the I-RNTI and the RAN identifier, the TMSI, the GUTI, and a dedicated identifier (which may be considered as an identifier that is newly added for the terminal device and specially used to identify the terminal device in the initial access procedure). Correspondingly, the terminal device sends the identifier of the terminal device to the second access network device in step 704.

Optionally, in an implementation solution (b) of the second implementation, when the terminal device accesses the first access network device (for example, when an RRC connection is established), the first access network device allocates the identifier of the terminal device to the terminal, and sends the identifier to the terminal device, for example, the C-RNTI, the I-RNTI, a combination of the C-RNTI and the RAN identifier, or a combination of the I-RNTI and the RAN identifier. Correspondingly, the terminal device sends the identifier of the terminal device to the second access network device in step 704.

For the second access network device, there may be the following several methods for determining, based on the identifier of the terminal device, the first information replied by the core network device:

In a first implementation, the second access network device determines, based on the identifier of the terminal device that is sent by the terminal device and a locally stored correspondence between the identifier of the terminal device and a second identifier, the first information replied by the core network device. The second identifier is an identifier that is used to identify the terminal device and determined by the first access network device and the core network device when the first access network device forwards the first request to the core network device. That is, the second identifier is an identifier that is used to identify the terminal device between the first access network device and the core network device. Specifically, when sending the first information to the second access network device, the core network device sends the first information and the second identifier together to the second access network device. In this way, the second access network device determines, based on the correspondence between the second identifier and the identifier of the terminal device, the identifier of the terminal device corresponding to the first information. Further, after the terminal device sends the identifier of the terminal device, the second access network device sends the first information to the terminal device.

In a second implementation, the core network device sends the first information and the identifier of the terminal device corresponding to the first information to the second access network device, and the second access network device stores the correspondence. In this way, after the terminal device sends the identifier of the terminal device to the second access network device, the second access network device can determine the first information corresponding to the identifier of the terminal device.

In addition, it should be noted that in this embodiment, the terminal device only establishes the connection to the second access network device, and does not send the first request in step 701 to the second access network device.

It should be noted herein that in this embodiment, no limitation is imposed on a manner in which the access network device to which the terminal device establishes the connection and the access network device, determined by the core network device, that stores and forwards the first information replied by the core network device are both the second access network device.

In a **first** implementation, the terminal device and the core network device may agree in advance in a protocol: After receiving the first request, the core network device sends the first information to the first access network device that forwards the first request. Correspondingly, the terminal device re-establishes a connection to the first access network device that receives the first request, and sends the identifier of the terminal device. For example, if the terminal device determines, based on an identifier of the first access network device in a received broadcast message, that the broadcast is from the first access network device, the terminal device establishes the connection to the first access network device. The identifier of the first access network device may be locally configured by the terminal device or may be first received from the first access network device. Alternatively, the terminal device establishes, based on a locally configured timer after the timer ends, a connection to an access network device that sends a broadcast message received by the terminal device. It can be ensured, based on the timer, that the access network device is the first access network device. Specifically, the timer may be determined by the terminal device based on ephemeris information.

It may be understood that the core network device stores, in the first access network device, the first information replied to the terminal device, and the terminal device establishes the connection to the first access network device and sends the identifier of the terminal device to the first access network device. In this way, after the connection to the terminal device is established, the second access network device may determine, based on the identifier of the terminal device, that the first information corresponding to the terminal device is stored, and send the first information to the terminal device, to help the terminal device complete a procedure of accessing the core network. In addition, it may be understood that in the first implementation, the second access network device is the first access network device, or in other words, the second access network device and the first access network device are a same access network device.

In a **second** implementation, the first access network device determines the second access network device, the first access network device indicates, to the terminal device, the second access network device to which the connection is to be established, and indicates the second access network device to the core network device. For example, the first access network device determines, as the second access network device based on ephemeris information, an access network device that can cover the terminal device earliest and can obtain the first information from the core network device earliest.

The ephemeris information is motion regularity information of a satellite, for example, includes information such as an orbit parameter, an angular velocity, and a velocity of the satellite. A communication device may calculate a location of the satellite on an orbit at each moment based on the information. The ephemeris information may be represented as a simple correspondence, for example, satellite location information corresponding to each moment/time period. The ephemeris information may also be represented as a satellite coverage map, for example, satellite coverage availability information (Satellite coverage availability information). The satellite coverage map may divide the surface of the earth into a plurality of grid points, and display a grid point covered by the satellite and a grid point not covered by the satellite at each moment. For example, a satellite orbits the Earth with an orbital period of one hour, with a resolution of minutes. The satellite corresponds to a satellite coverage map in each minute. On the map, some grid points are bright, and some grid points are dark. The bright grid points represent grid points that are covered at a corresponding moment in each period of the satellite.

It should be noted herein that the ephemeris information in this application includes but is not limited to conventional ephemeris information, satellite map information, and deployment information of a gateway station. The conventional ephemeris information includes an orbit parameter, or a parameter such as an orientation of the satellite obtained through calculation based on the orbit parameter. It may be understood that the conventional ephemeris information may be used to calculate, predict, describe, or track a flight status of the satellite, such as time, a location, and a velocity. For example, the conventional ephemeris information may be 17-byte (bytes) information to indicate a location (78 bits) and a velocity (54 bits), or the conventional ephemeris information may be 18-byte information to indicate orbit parameters (for example, a semi-major axis, a range (range), an eccentricity, and an argument of periapsis). The satellite map information may be a coverage area of the satellite on a map at each moment. A specific form, content, and name of the ephemeris information are not limited in this application. For details, refer to a definition of the ephemeris information in an existing protocol. For example, the ephemeris information in this application may also be referred to as satellite coverage availability information (satellite coverage availability information).

It should be noted herein that a manner of indicating, by the first access network device to the terminal device, the second access network device to which the connection is to be established is not limited in this embodiment.

For example, in an indication manner, the first access network device determines first duration. A value of the first duration satisfies: After the first duration, the second access network device can cover the terminal device, and has obtained the first information from the core network device. Then, the first access network device sends second information to the terminal device to indicate the first duration, and the first access network device sends an identifier of the second access network device to the core network device, so that the core network device sends the first information to the second access network device, to help the terminal device complete a procedure of accessing the core network.

For example, the first access network device may determine the first duration based on the ephemeris information and at least one of the following information: a location of a satellite on which the first access network device is deployed, a location of the terminal device, and current time. It may be understood that the first duration may be considered as an occasion used to trigger the terminal device to establish the connection to the second access network device. Therefore, the first duration is also referred to as an access timer of the terminal device. Specific content of the second information that specifically indicates the first duration is not limited in this embodiment. For example, the content of the second information is the determined first duration. For another example, the content of the second information is a timer, and the first duration is indicated by using the timer timer. Alternatively, the content of the second information may be time at which the terminal device establishes the connection. Correspondingly, after receiving the time, the terminal device determines the first duration with reference to the current time.

It may be understood that, in this manner, a broadcast message received by the terminal device after the first duration is a broadcast message of the second access network device. Further, an access network device that the terminal device accesses and to which the terminal device sends the identifier of the terminal device is the second access network device. The core network device has sent the first information to the second access network device. Therefore, after the terminal device establishes the connection to the second access network device, the second access network device determines, based on the identifier of the terminal device, the stored first information corresponding to the terminal device, and sends the first information to the terminal device, to complete a procedure of accessing the core network by the terminal device.

Optionally, in the manner of indicating the first duration, if the second access network device determined by the first access network device is the same as the first access network device, the first access network device may indicate only the first duration to the terminal device, and does not indicate the second access network device to the core network device. Correspondingly, the core network device forwards the first information through the first access network device. Optionally, when the first access network device and the second access network device are a same access network device, because the terminal device establishes the connection only to the first access network device, the identifier of the terminal device may be RAN specific (that is, the identifier of the terminal device does not need to be globally unique, and is unique in each RAN).

For example, in another indication manner, after determining the second access network device, the first access network device sends a first identifier used to identify the second access network device to the terminal device, to indicate the terminal device to access the second access network device, and sends the first identifier to the core network device, to indicate the core network device to determine the second access network device that receives (or stores) the first information.

For example, the first identifier used to identify the second access network device may be a physical cell identifier (physical cell identifier, PCI) of a cell, or an E-UTRAN cell global identifier (E-UTRAN cell global identifier, ECGI)/NR cell global identifier (NR cell global identifier, NCGI) (including an eNB/gNB ID) in a system information block (system information block, SIB1) message, or a global RAN node ID included in the second access network device.

It may be understood that, in this manner, if the terminal device determines, based on the first identifier in the received broadcast message, that the broadcast message is from the second access network device, the terminal device establishes the connection to the second access network device, and sends the identifier of the terminal device to the second access network device. The core network device has sent, to the second access network device, the first information replied to the terminal device. Therefore, after the connection to the terminal device is established, the second access network device determines, based on the identifier of the terminal device, the stored first information corresponding to the terminal device, and sends the first information to the terminal device, to complete a procedure of accessing the core network by the terminal device.

Optionally, in the manner of indicating the identifier of the second access network device, the terminal device may continuously perform detection, or in other words, perform continuous detection, until a broadcast message including the first identifier is detected. Alternatively, the terminal device may determine a time period for next coverage by the second access network device (or may be considered as a time period in which a service link between the terminal device and the second access network device is available next time). For example, the terminal device determines, based on the ephemeris information, the time period for next coverage by the second access network device, and then the terminal device detects, only in the time period, the broadcast message including the first identifier.

Optionally, in the manner of indicating the identifier of the second access network device, if the second access network device determined by the first access network device is the same as the first access network device, the first access network device may send the first identifier only to the terminal device, and does not send the first identifier to the core network device. Correspondingly, the core network device sends the first information to the first access network device.

In a **third** implementation, the terminal device detects only a broadcast message of the first access network device and establishes a connection only to the first access network device, the first access network device sends an identifier of the first access network device to the core network device, and the core network device determines the second access network device that receives (or stores) the first information. In this case, if the second access network device determined by the core network device is different from the first access network device, the core network device sends the first information, the identifier of the terminal device, and the identifier of the first access network device to the second access network device together. Correspondingly, the second access network device further uses a broadcast message to carry the identifier of the first access network device.

It may be understood that in the third implementation, when the terminal device receives the broadcast message including the identifier of the first access network device, in one case, the broadcast message including the identifier of the first access network device is from the first access network device, and in another case, the broadcast message is from the second access network device. In this case, if the broadcast message is from the second access network device, after the terminal device establishes the connection to the second access network device and sends the identifier of the terminal device, the second access network device may determine the corresponding first information based on the identifier of the terminal device, to send the first information to the terminal device, and help the terminal device complete a procedure of accessing the core network.

It should be understood that, in the third implementation, the identifier of the terminal device needs to be globally unique because different access network devices need to send messages to the terminal device. If the identifier is not globally unique, identifiers of the terminal device determined by different access network devices and different terminal devices may be duplicate.

Optionally, in the third implementation, the second access network device may continuously broadcast the identifier of the first access network device. Alternatively, the second access network device may broadcast the identifier of the first access network device only in a time period in which the terminal device is covered. For example, the first access network device sends location information of the terminal device to the core network device, and then the core network device sends the location information of the terminal device to the second access network device. The second access network device determines, based on ephemeris information and the location of the terminal device, the time period in which the terminal device is covered, and then uses a broadcast message to carry the identifier of the first access network device during broadcasting in the time period. Alternatively, the core network device directly determines, based on the ephemeris information and the terminal device, the time period in which the second access network device covers the terminal device, and then sends the time period to the second access network device. Correspondingly, the second access network device uses a message broadcast in the time period to carry the identifier of the first access network device.

In a **fourth** implementation, the terminal device and the core network device agree to determine the same second access network device according to a same algorithm instead of as indicated by the first access network device.

For example, both the terminal device and the core network device determine the second access network device based on ephemeris information and at least one of the following information: a location of the terminal device and current time. For example, both the terminal device and the core network device determine, as the second access network device, an access network device that can cover the terminal device earliest and can obtain the first information from the core network device earliest. In this way, after the terminal device establishes the connection to the second access network device and sends the identifier of the terminal device to the second access network device, the second access network device determines, based on the identifier of the terminal device, the stored first information corresponding to the terminal device, and sends the first information to the terminal device, to complete a procedure of accessing the core network by the terminal device.

It may be understood that, in this manner, the second access network device determined by the terminal device and the core network device may be the same as the first access network device, or may not be the same as the first access network device. In addition, it may be understood that the fourth implementation is also different from the first implementation. The first implementation may be considered as a manner specified in a protocol, that is, neither the terminal device nor the core network device performs any internal process of determining the second access network device. In the fourth implementation, both the terminal device and the core network device determine the second access network device according to the same algorithm.

In a **fifth** implementation, the terminal device determines the second access network device, and sends, to the core network device through the first access network device, a first identifier used to identify the second access network device. Correspondingly, after receiving the first identifier, the core network sends the first information to the second access network device.

For example, the terminal device determines the second access network device based on ephemeris information and at least one of the following information: a location of the terminal device and current time. For example, the terminal device determines, as the second access network device, an access network device that can cover the terminal device earliest and can obtain the first information from the core network device earliest, and then the terminal device sends an identifier of the second access network device to the core network device through the first access network device, to indicate, to the core network device, the second access network device to which the terminal device is to establish the connection. The core network device sends, to the second access network device, the first information replied to the terminal device, to ensure that the terminal device obtains, after establishing the connection to the second access network device, the first information replied by the core network device and stored by the second access network device, to ensure that the terminal device completes a procedure of accessing the core network.

It may be understood that, in this manner, the second access network device determined by the terminal device may be the same as the first access network device, or may not be the same the first access network device. When the first access network device and the second access network device are not a same access network device, the determined access network device needs to be indicated to the core network device, so that an access network device to which the terminal device establishes a connection is the same as an access network device that receives the first information sent by the core network device. Optionally, when the first access network device and the second access network device are a same access network device, the terminal device may not indicate, to the core network device through the first access network device, the second access network device to which the connection is to be established. For example, the core network device sends the first information to the first access network device when there is no indication.

Optionally, in the fifth implementation, the terminal device may continuously perform detection, or the terminal device may determine a time period for next coverage by the second access network device, and then the terminal device detects, only in the time period, a broadcast message including the first identifier. For this part, refer to the descriptions in the second implementation. Details are not described herein again.

In a **sixth** implementation, the core network device determines the second access network device. For example, the core network device determines, as the second access network device based on ephemeris information, an access network device that can cover the terminal device earliest and can obtain the first information from the core network device earliest, and then the core network device does not indicate the second access network device to the terminal device. Correspondingly, when receiving any broadcast message, the terminal device establishes a connection to an access network device that the broadcast message is from, and sends the identifier of the terminal device. Specifically, the second access network device is also included. The second access network device stores the first information replied by the core network device to the terminal device. Therefore, after a connection to the terminal device is established, the second access network device determines, based on the identifier of the terminal device, the first information corresponding to the identifier of the terminal device, and sends the first information to the terminal device, to help the terminal device complete a procedure of accessing the core network. If an access network device accessed by the terminal device is not the second access network device, there may be the following manner: If the terminal device does not receive, in a time period, the first information sent by the access network device, the terminal device automatically releases a connection to the access network device. Alternatively, after establishing a connection to an access network device, the terminal device sends indication information to the access network device, to indicate the access network device to send the information replied by the core network device to the terminal device. If the access network device determines, based on the identifier of the terminal device, that the first information replied by the core network device to the terminal device is not stored, the access network device releases the connection to the terminal device or indicates the terminal device to release the connection.

Step 705: The second access network device sends the first information to the terminal device, where the first information is information replied by the core network device to the terminal device in response to the first request; and the terminal device receives the first information.

For example, the first information may be any one of the following: information that indicates that the terminal device is allowed to access the core network (for example, the attach accept or the registration accept), an authentication request (authentication request), an N1 message, or a non-access stratum message (NAS message).

As described in step 704, the second access network device stores the first information replied by the core network device to the terminal device, and the second access network device may determine the identifier of the terminal device corresponding to the first information. Therefore, after the terminal device establishes the connection to the second access network device and sends the identifier of the terminal device to the second access network device, the second access network device may determine, based on the identifier of the terminal device, the first information corresponding to the terminal device, to send the first information to the terminal device, so as to help the terminal device complete a procedure of accessing the core network.

It can be learned that in the embodiment of FIG. 7, after the terminal device sends the first request to the first access network device, even if the terminal device is disconnected from the first access network device, the terminal device establishes the connection to the second access network device that stores the first information and sends the identifier of the terminal device to the second access network device, so that the second access network device can determine, based on the identifier of the terminal device, the stored first information replied by the core network device to the terminal device, and then send the first information to the terminal device, to also help the terminal device complete a procedure of accessing the core network.

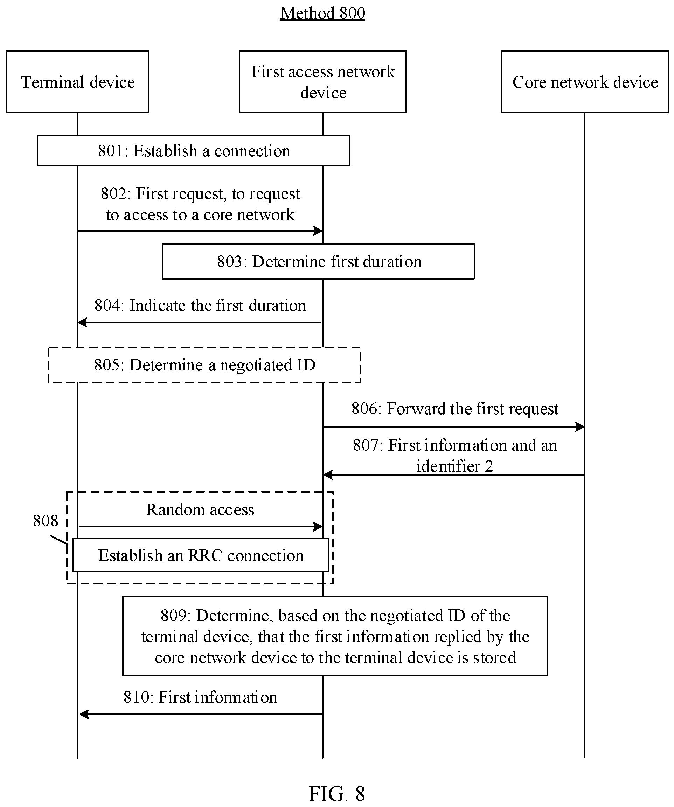

The following describes in detail the communication method shown in FIG. 7 with reference to FIG. 8 to FIG. 15.

Specifically, in the embodiment of FIG. 8, a first access network device determines that both an access network device to which a terminal device initiates a connection and an access network device that receives first information sent by a core network device are the first access network device. In other words, in the embodiment of FIG. 8, a second access network device is the same as the first access network device.

The following provides detailed descriptions with reference to FIG. 8. FIG. 8 is a schematic flowchart of a communication method according to an embodiment of this application. The method 800 shown in FIG. 8 includes step 801 to step 810. The following describes in detail steps in the method 800.

Step 801: The terminal device establishes a connection to the first access network device.

It should be understood that before sending a first request to the first access network device, the terminal device first needs to establish the connection to the first access network device. For example, the terminal device establishes the connection to the first access network device after performing cell selection and random access. For a process in which the terminal device establishes the connection to the first access network device, refer to the foregoing process in which the terminal device accesses a base station.

After the terminal device establishes the connection to the first access network device, the terminal device may send information at an RRC layer and some NAS information.

Step 802: The terminal device sends the first request to the first access network device, and the first access network device receives the first request.

It may be understood that the first request in this application is NAS information.

For detailed content of this step, refer to the descriptions in S701 in the embodiment of FIG. 7. Details are not described herein again.

Step 803: The first access network device determines first duration based on ephemeris information.

Specifically, after receiving the first request, the first access network device determines the first duration. Specifically, the first duration may be considered as an occasion used to trigger the terminal device to establish the connection to the first access network device. Therefore, the first duration determined by the first access network device is also referred to as an access timer of the terminal device determined by the first access network device. For example, if the first duration is 30 seconds, the terminal device establishes the connection to the first access network device 30 seconds after receiving the first duration indicated by the first access network device.

In this embodiment, when the first access network device determines the first duration, the first duration needs to satisfy: After the first duration, the first access network device can cover the terminal device, and the first access network device has obtained (or stored) the first information replied by the core network device to the terminal device. In other words, the first duration needs to satisfy: After the first duration, a service link between the first access network device and the terminal device is available again, and in the first duration, a feeder link between the first access network device and a ground station is available, so that the first information that is sent by the core network device and replied to the terminal device can be stored. For descriptions of the first information, refer to the descriptions in the embodiment of FIG. 7. Details are not described herein again.

Step 804: The first access network device sends second information to the terminal device, where the second information indicates the first duration; and the terminal device receives the second information.

Step 805: The terminal device and the first access network device determine an identifier used by the terminal device in an initial access procedure.

In this embodiment, the identifier of the terminal device is also referred to as a negotiated ID. It may be understood that a function of the negotiated ID is to identify, in the initial access procedure, the terminal device that sends the first request, to ensure that information replied by the core network device to the terminal device, for example, information such as an initial access accept message and an authentication request, is sent to the terminal device.

This step may be performed before or after any step of step 801 to step 804, or the negotiated ID may be sent in any step of step 801, step 802, and step 804. For example, when the connection is established in 801, the first access network device sends a C-RNTI to the terminal device, and the C-RNTI is used as the negotiated ID. Alternatively, in 802, the terminal device sends an IMSI to the first access network device, and the IMSI is used as the negotiated ID.

In the embodiment of FIG. 8, the negotiated ID may be RAN specific (that is, the negotiated ID does not need to be globally unique, and is unique in each RAN), because the terminal device establishes the connection only to the first access network device.

It should be noted that, in this embodiment, step 805 is optional. That is, a process in which the terminal device negotiates the negotiated ID with the first access network device is optional. For example, if the first request also carries the identifier of the terminal device when the terminal device sends the first request, this step may not be performed.

Step 806: When a feeder link between the first access network device and the core network device is available, the first access network device indicates the first request of the terminal device to the core network device.

Optionally, the first access network device may send an identifier of the first access network device to the core network device, to explicitly indicate, to the core network device, that the first access network device is an access network device that receives the information replied by the core network device to the terminal device.

Step 807: The core network device indicates, to the first access network device, the first information replied to the terminal device.

In this embodiment, after receiving the first request that is forwarded by the first access network device and used by the terminal device to request to access a core network, the core network device determines the first information that needs to be fed back to the terminal device. For example, the first information may be any one of the following: an attach accept, a registration accept, an authentication request (authentication request), and an N1 message.

It may be understood that, that the core network device indicates, to the first access network device, the first information replied to the terminal device specifically means that when the feeder link between the first access network device and the ground station is available, the core network device indicates, to the first access network device, the first information replied to the terminal device.

Specifically, the core network device sends, to the first access network device, the first information and the identifier that is used to identify the terminal device and determined by the first access network device and the core network device. That is, the identifier may be considered as the second identifier in the embodiment of FIG. 7, for example, may be represented as an identifier 2. Correspondingly, the first access network device determines, based on a correspondence between the negotiated ID and the identifier 2, the negotiated ID corresponding to the first information replied by the core network device.

In some embodiments, the identifier 2 is the same as the negotiated ID, and in some other embodiments, the identifier 2 is different from the negotiated ID.

Step 808: After the first duration ends, the terminal device establishes a connection to the first access network device.

Specifically, the step includes: The terminal device initiates random access to the first access network device after the first duration ends; and the terminal device establishes an RRC connection to the first access network device. More specifically, in this application, when the terminal device establishes the connection to the first access network device, information (that is, information at an RRC layer) sent to the first access network device does not include the information used to request to access the core network, that is, does not include the first information. In addition, in this embodiment, when re-establishing the connection to the first access network device, the terminal device sends, to the first access network device, the negotiated ID previously determined by the terminal device and the first access network device.

Optionally, that the terminal device initiates random access to the first access network device and the terminal device establishes the RRC connection to the first access network device after the first duration ends may alternatively be replaced with: The terminal device initiates RRC resume to the first access network device. A difference is that when random access is initiated, the terminal device and the first access network device do not reserve an RRC context, re-initiate random access, and establish a new RRC context. If RRC resume is initiated, the first access network device and the terminal device need to reserve the RRC context.

Optionally, the terminal device may further send fifth information to the first access network device. The fifth information indicates the first access network device to feed back the information replied by the core network device to the terminal based on the first information. That is, it may be considered that the terminal device explicitly indicates the first access network device to feed back the information fed back by the core network device to the terminal device based on the first information.

In this embodiment, in a process of establishing the connection to the first access network device, the terminal device sends the negotiated ID to the first access network device.

Step 809: The first access network device determines, based on the negotiated ID of the terminal device, that the first information replied by the core network device to the terminal device is stored.

Specifically, after the first access network device obtains the negotiated ID of the terminal device, the first access network device determines, based on the correspondence between the negotiated ID and the identifier 2, the first information replied by the core network device to the terminal device.

Step 810: The first access network device sends the first information to the terminal device.

It can be learned that in the communication method provided in this embodiment, the first access network device indicates the first duration to the terminal device, and triggers the terminal device to re-establish the connection to the first access network device after the first duration ends. Further, the first access network device determines, based on the negotiated ID of the terminal device, that the first information replied by the core network device to the terminal device is stored, and then forwards the first information to the terminal device, to help the terminal device complete a procedure of accessing the core network.

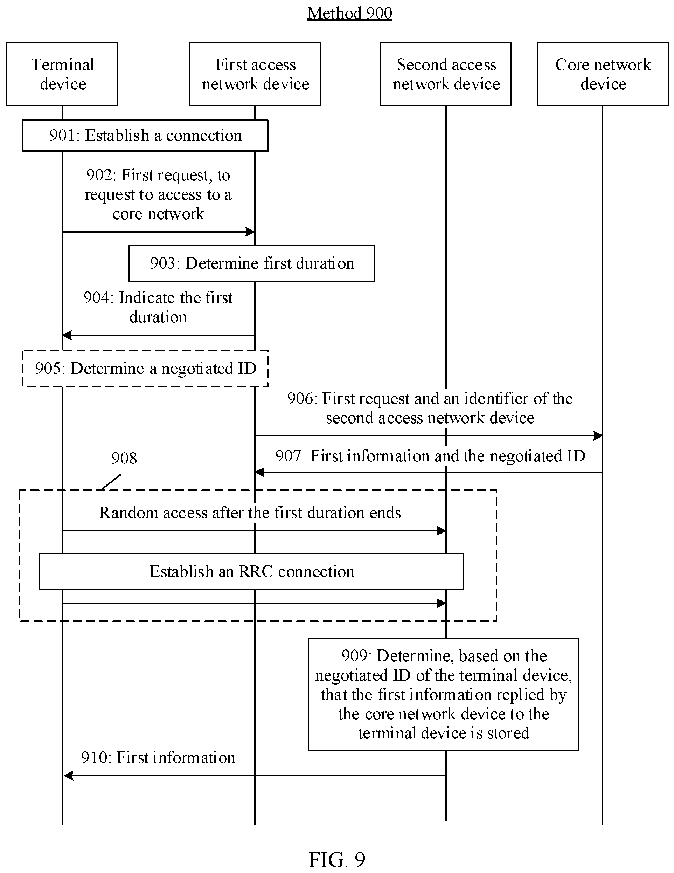

FIG. 9 is a schematic flowchart of a communication method 900 according to another embodiment of this application. In the embodiment of FIG. 9, a first access network device still determines an access network device to which a terminal device initiates a connection and an access network device that receives first information sent by a core network device. However, a difference from the embodiment of FIG. 8 lies in: The first access network device determines that the access network device to which the terminal device initiates a connection and the access network device that receives the first information sent by the core network device are not the first access network device. That is, in the embodiment of FIG. 9, a second access network device is different from the first access network device.

The following provides detailed descriptions with reference to FIG. 9. FIG. 9 is a schematic flowchart of a communication method according to an embodiment of this application. The method 900 shown in FIG. 9 includes step 901 to step 910. The following describes in detail steps in the method 900.

Step 901: The terminal device establishes a connection to the first access network device.

Step 902: The terminal device sends a first request to the first access network device, and the first access network device receives the first request.

Step 903: The first access network device determines first duration based on ephemeris information.

In this embodiment, when the first access network device determines the first duration, the first duration needs to satisfy: After the first duration, the second access network device can cover the terminal device, and the second access network device has obtained (or stored) the first information replied by the core network device to the terminal device. In other words, the first duration needs to satisfy: After the first duration, a service link between the second access network device and the terminal device is available again, and in the second duration, a feeder link between the second access network device and a ground station is available, so that the first information that is sent by the core network device and replied to the terminal device can be stored.

Step 904: The first access network device sends second information to the terminal device, where the second information indicates the first duration; and the terminal device receives the second information.

For this step, refer to content in S804 in the embodiment of FIG. 8. Details are not described herein again.

Step 905: The terminal device and the first access network device determine an identifier used by the terminal device in an initial access procedure.

In this embodiment, the identifier determined by the terminal device and the first access network device is also referred to as a negotiated ID. For content of the negotiated ID, refer to the descriptions in step 802 in the embodiment of FIG. 8. Details are not described herein again.

For content of this step, refer to content in S805 in the embodiment of FIG. 8. Details are not described herein again.

Step 906: When a feeder link between the first access network device and the core network device is available, the first access network device indicates the first request of the terminal device to the core network device.

In this embodiment, when sending the first request to the core network device, the first access network device further indicates the negotiated ID to the core network device.

In this embodiment, the first access network device further sends an identifier of the second access network device to the core network device, to indicate the core network device to send, to the second access network device, the first information replied to the terminal device. In other words, in this embodiment, the first access network device sends, to the core network device, the identifier of the access network device that receives the first information.

Step 907: The core network device indicates, to the second access network device, the first information replied to the terminal device.

It may be understood that, that the core network device indicates, to the second access network device, the first information replied to the terminal device specifically means that when the feeder link between the second access network device and the ground station is available, the core network device indicates, to the second access network device, the first information replied to the terminal device.

In this embodiment, the core network device sends the first information and the negotiated ID in step 902 to the second access network device, so that the second access network device determines the identifier (the negotiated ID) of the terminal device corresponding to the first information replied by the core network device.

Step 908: After the first duration ends, the terminal device establishes a connection to the second access network device.

Specifically, the step includes: The terminal device initiates random access to the second access network device; and the terminal device establishes an RRC connection to the second access network device.

In addition, in this embodiment, when establishing the connection to the second access network device, the terminal device sends, to the first access network device, the negotiated ID previously determined by the terminal device and the first access network device.

Optionally, the terminal device may further send fifth information to the first access network device. The fifth information indicates the second access network device to feed back information replied by the core network device to the terminal based on the first information. That is, it may be considered that the terminal device explicitly indicates the second access network device to feed back the information fed back by the core network device to the terminal device based on the first information.

Step 909: The second access network device determines, based on the negotiated ID of the terminal device, the first information replied by the core network device to the terminal device.

It may be understood that, in step 907, the core network device indicates, to the second access network device, the first information replied to the terminal device and the negotiated ID corresponding to the first information. Therefore, after the terminal device establishes the connection to the second access network device and sends the negotiated ID, the second access network device determines, based on the negotiated ID, that the first information replied by the core network device to the terminal device is stored.

Step 910: The second access network device sends the first information to the terminal device.

It can be learned that in the communication method provided in this embodiment, the first access network device indicates the first duration to the terminal device, so that the terminal device establishes the connection to the second access network device after the first duration ends. Further, the second access network device determines, based on the negotiated ID of the terminal device, the first information replied by the core network device to the terminal device, and then forwards the first information to the terminal device, to help the terminal device complete a procedure of accessing the core network.

Optionally, in the embodiment shown in FIG. 9, in step 906, the access network device may not send the identifier of the second access network device to the core network device. Correspondingly,
step 907 is replaced with: The core network device indicates, to the first access network device, the first information replied to the terminal device.

Step 909 is replaced with: The second access network device obtains, from the first access network device based on the negotiated ID of the terminal device, the first information replied by the core network device to the terminal device. For example, the second access network device sends the negotiated ID of the terminal device to a plurality of access network devices. The plurality of access network devices include the first access network device. After receiving the negotiated ID of the terminal device, the first access network device determines that the first information replied by the core network device to the terminal device is stored, and sends the first information to the second access network device.

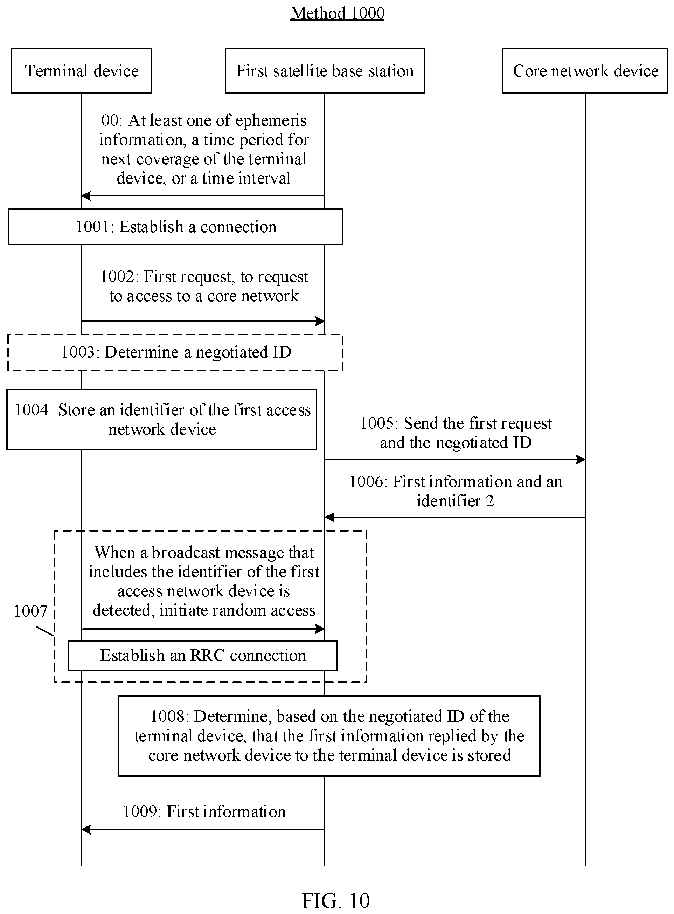

FIG. 10 is another schematic flowchart of a communication method 1000 according to an embodiment of this application. In the embodiment of FIG. 10, a terminal device stores an identifier of a first access network device, and a core network device sends, to the first access network device, first information replied to the terminal device. Then, when receiving a broadcast message of the first access network device, the terminal device establishes a connection to the first access network device. In other words, in the embodiment of FIG. 10, a second access network device is the same as the first access network device.

As shown in FIG. 10, the embodiment of FIG. 10 includes the following steps.

Step 1001: The terminal device establishes a connection to the first access network device.

Step 1002: The terminal device sends a first request to the first access network device, and the first access network device receives the first request.

Step 1003: The terminal device and the first access network device determine an identifier used by the terminal device in an initial access procedure.

In this embodiment, the identifier is also referred to as a negotiated ID.

For detailed content of step 1001 and step 1003, refer to descriptions of corresponding parts in the embodiment of FIG. 8. Details are not described herein again.

Step 1004: The terminal device stores the identifier of the first access network device.

For example, the first access network device may explicitly indicate the terminal device to store the identifier of the first access network device. It may be understood that, explicitly indicating the terminal device to store the identifier of the first access network device may also be considered as explicitly indicating the terminal device to establish the connection to the first access network device. Alternatively, the terminal device stores the identifier of the first access network device by default. It may be understood that the identifier of the first access network device may be considered as the first identifier in the embodiment of FIG. 3.

For example, the identifier of the first access network device may be a PCI (physical cell identifier, physical cell identifier) of a cell, an ECGI (E-UTRAN cell global identifier, E-UTRAN cell global identifier)/NCGI (NR cell global identifier, NR cell global identifier) (including an eNB/gNB ID) in a SIB1 (System Information Block, system information block) message, or a global RAN node ID included in the first access network device.

In this embodiment, the identifier of the first access network device is used to identify the first access network device, and may be sent to the terminal device in a broadcast message, or may be sent to the terminal device in an RRC message.

Step 1005: When a feeder link between the first access network device and the core network device is available, the first access network device indicates the first request of the terminal device to the core network device.

Step 1006: The core network device indicates, to the first access network device, the first information replied to the terminal device.

For detailed content of step 1005 and step 1006, refer to content of step 806 and step 807 in the embodiment of FIG. 8. Details are not described herein again.

Step 1007: When receiving (or detecting) a broadcast message including the identifier of the first access network device, the terminal device establishes a connection to the first access network device.

Specifically, this step includes: When the terminal device receives the broadcast message including the identifier of the first access network device, the terminal device initiates random access to the first access network device; and the terminal device establishes an RRC connection to the first access network device.

It may be understood that, when an access network device performs broadcasting, a broadcast message carries an identifier used to identify the access network device. Therefore, in this embodiment, when receiving the broadcast message, the terminal device may determine, based on the broadcast identifier of the access network device, whether the currently received broadcast message is from the first access network device.

It should be noted that a manner of enabling the terminal device to receive the broadcast message including the identifier of the first access network device is not limited in this embodiment.

For example, in an implementation, the terminal device may continuously perform detection, or may perform continuous detection, until the broadcast message including the identifier of the first access network device is detected. In other words, in this embodiment, after sending the first request to the first access network device, the terminal device continuously detects, even within a NAS timer, the broadcast message including the identifier of the first access network device.

A concept of the NAS timer is a time period that the terminal device can wait after sending a NAS message. If a response is received in the time period, the procedure can be normally performed. If the time period is exceeded, the terminal device considers that the sent NAS message is lost or incorrect, and may resend the NAS message. For example, if a NAS timer of the first information expires, the terminal device may retransmit the first information. However, in a time period of the NAS timer, the terminal device waits for a response, does not initiate a new message, and does not perform an action such as cell selection or random access.

For example, in another implementation, the terminal device may determine a time period for next coverage by the first access network device (or may be considered as a time period in which a service link between the terminal device and the first access network device is available next time). For example, the terminal device determines, based on ephemeris information, the time period for next coverage by the first access network device, and then the terminal device detects, only in the time period, the broadcast message including the identifier of the first access network device. It may be understood that this manner can reduce power consumption of the terminal device.

Optionally, as shown in FIG. 10, the first access network device may perform step 00: The first access network device sends at least one of the following to the terminal device: the ephemeris information, or a time period for next coverage of the terminal device, or a time interval. The time interval is specifically an interval between time at which the terminal device is covered by the first access network device next time and time at which the terminal device is currently covered. Correspondingly, the terminal device determines, as indicated by the first access network device, the time period for next coverage by the first access network device.

Optionally, step 1107 may alternatively be replaced with: When receiving the broadcast message including the identifier of the first access network device, the terminal device initiates RRC resume to the first access network device, so that the terminal device re-establishes a connection to the first access network device. Similarly, detection may be continuous detection, or detection in a target time period.

It may be understood that when the broadcast message including the identifier of the first access network device is detected, it indicates that the service link between the terminal device and the first access network device is available. That is, information sent by the terminal device can be received by the first access network device, and a signal sent by the first access network device can be received by the terminal device.

In this embodiment, when the terminal device detects a broadcast message that does not include the identifier of the first access network device, the terminal device establishes a connection.

In this embodiment, when establishing the connection to the first access network device, the terminal device further sends the negotiated ID to the first access network device.

Step 1008: The first access network device determines, based on the negotiated ID of the terminal device, that the first information fed back by the core network device to the terminal device is stored.

Step 1009: The first access network device sends the first information to the terminal device.

It can be learned that in the communication method provided in this embodiment, the terminal device detects the broadcast message including the identifier of the first access network device, and then re-establishes the connection to the first access network device when the broadcast message including the identifier of the first access network device is detected. The first access network device determines, based on the negotiated ID of the terminal device, that the first information replied by the core network device to the terminal device is stored, and then forwards the first information to the terminal device, to help the terminal device complete a procedure of accessing a core network.

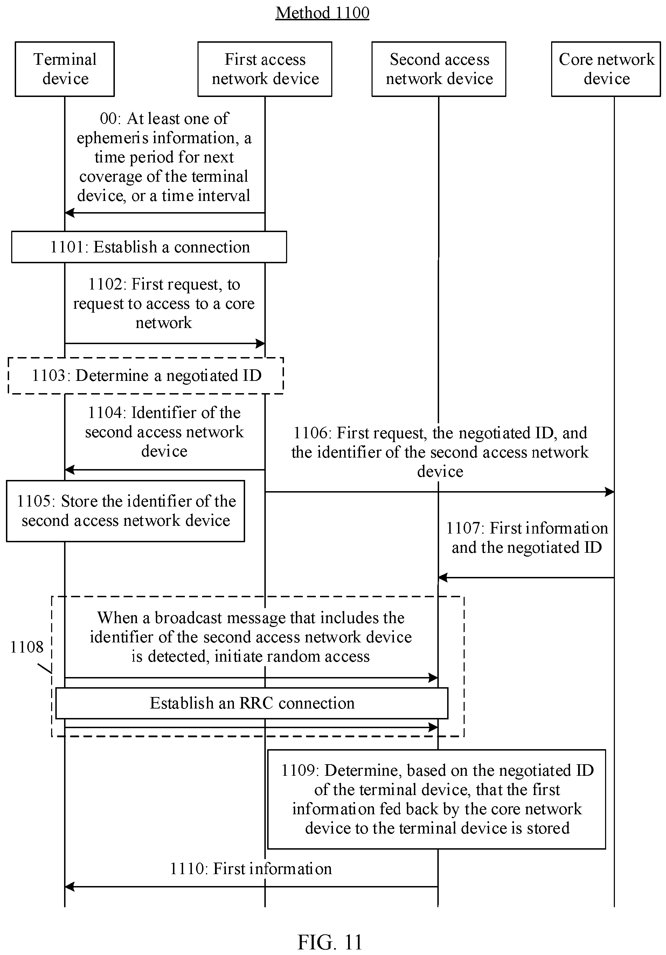

FIG. 11 is still another schematic flowchart of a communication method according to an embodiment of this application. In the embodiment of FIG. 11, a difference from the embodiment of FIG. 10 lies in: A terminal device stores an identifier of an access network device different from a first access network device. That is, the terminal device does not establish an RRC connection to the first access network device. In other words, in this embodiment, a second access network device is different from the first access network device.

As shown in FIG. 11, the embodiment of FIG. 11 includes the following steps.

Step 1101: The terminal device establishes a connection to the first access network device.

Step 1102: The terminal device sends a first request to the first access network device, and the first access network device receives the first request.

Step 1103: The terminal device and the first access network device determine an identifier used by the terminal device in an initial access procedure.

In this embodiment, the identifier is also referred to as a negotiated ID.

Step 1104: The first access network device sends an identifier of the second access network device to the terminal device.

The identifier of the second access network device is used to identify the second access network device, and the identifier of the second access network device may also be considered as the first identifier in the embodiment of FIG. 3.

In this embodiment, the second access network device is specifically an access network device that is determined by the first access network device and configured to send first information to the terminal device.

Optionally, the second access network device is an access network device that is determined by the first access network device based on ephemeris information and that can cover the terminal device earliest and can obtain the first information from a core network device earliest.

For example, the first access network device may determine the second access network device by negotiation with at least one other access network device through an inter-satellite link.

Step 1105: The terminal device stores the identifier of the second access network device.

Step 1106: When a feeder link between the first access network device and the core network device is available, the first access network device indicates the first request of the terminal device to the core network device.

In this embodiment, when sending the first request to the core network device, the first access network device further indicates the negotiated ID of the terminal device to the core network device.

In this embodiment, the first access network device further sends the identifier of the second access network device to the core network device, to indicate the core network device to send, to the second access network device, the first information replied to the terminal device. In other words, in this embodiment, the first access network device sends, to the core network device, the identifier of the access network device that receives the first information.

Step 1107: The core network device indicates, to the second access network device, the first information replied to the terminal device.

It may be understood that, that the core network device indicates, to the second access network device, the first information replied to the terminal device specifically means that when a feeder link between the second access network device and a ground station is available, the core network device indicates, to the second access network device, the first information replied to the terminal device.

In this embodiment, when sending the first information to the second access network device, the core network device further sends the negotiated ID of the terminal device, so that the second access network device determines a correspondence between the negotiated ID and the first information, and the second access network device determines the terminal device corresponding to the first information replied by the core network device.

Step 1108: When detecting a broadcast message including the identifier of the second access network device, the terminal device establishes a connection to the second access network device.

Specifically, the step includes: The terminal device detects the broadcast message including the identifier of the second access network device, and initiates random access; and the terminal device establishes an RRC connection to the second access network device.

For example, in an implementation, the terminal device may continuously perform detection, or may perform continuous detection, until the broadcast message including the identifier of the second access network device is detected.

For another example, in another implementation, the terminal device may determine a time period for next coverage by the second access network device (or may be considered as a time period in which a service link between the terminal device and the second access network device is available next time). For example, the terminal device determines, based on the ephemeris information, the time period for next coverage by the second access network device, and then the terminal device detects, only in the time period, the broadcast message including the identifier of the second access network device.

Optionally, as shown in FIG. 11, the first access network device may perform the following: The first access network device sends at least one of the following to the terminal device: the ephemeris information, or a time period for next coverage of the terminal device by the second access network device, or a time interval. The time interval is specifically an interval between time at which the terminal device is covered by the second access network device and time at which the terminal device is currently covered. Correspondingly, the terminal device determines, as indicated by the first access network device, a time period for next coverage by the second access network device.

It may be understood that when the broadcast message including the identifier of the second access network device is detected, it indicates that a service link between the terminal device and the second access network device is available. That is, information sent by the terminal device can be received by the second access network device, and a signal sent by the second access network device can be received by the terminal device.

In this embodiment, when the terminal device detects a broadcast message that does not include the identifier of the second access network device, the terminal device does not initiate random access or RRC resume.

In this embodiment, when establishing the connection to the second access network device, the terminal device further sends the negotiated ID to the second access network device.

Step 1109: The second access network device determines, based on the negotiated ID of the terminal device, that the first information fed back by the core network device to the terminal device is stored.

Step 1110: The second access network device sends the first information to the terminal device.

It can be learned that, in the communication method provided in this embodiment, the terminal device detects the broadcast message including the identifier of the second access network device, and then when the broadcast message including the identifier of the second access network device is detected, establishes the connection to the second access network device and sends the negotiated ID to the second access network device, so that the second access network device sends, to the terminal device based on the negotiated ID, the first information replied by the core network device to the terminal device.

In summary of embodiments shown in FIG. 8 to FIG. 11, it can be learned that in the embodiments shown in FIG. 8 and FIG. 9, in a manner in which the first access network device indicates the first duration to the terminal device, the terminal device is triggered to establish a connection to the access network device that stores the first information, to obtain the first information, to help the terminal device access a network. However, in the embodiments shown in FIG. 10 and FIG. 11, the terminal device stores the identifier of the access network device that forwards the first information, to trigger the terminal device to obtain the first information from the access network device that stores the first information, to help the terminal device access a network.

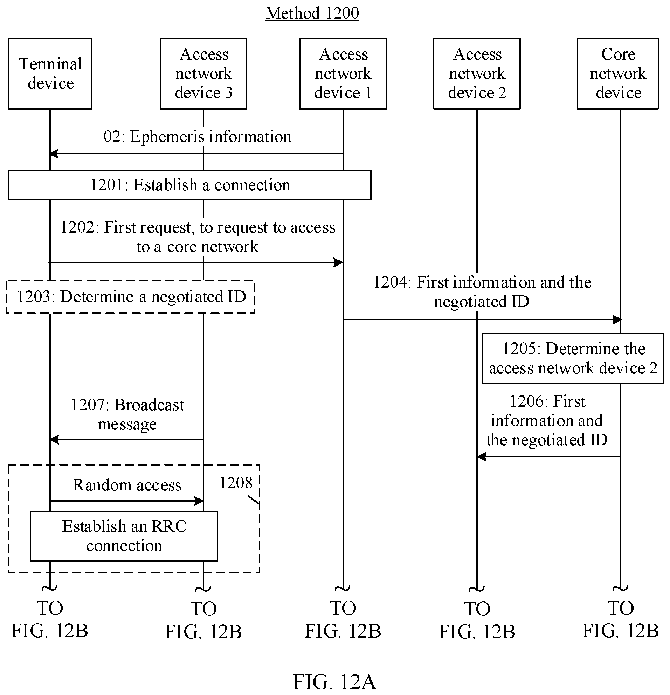

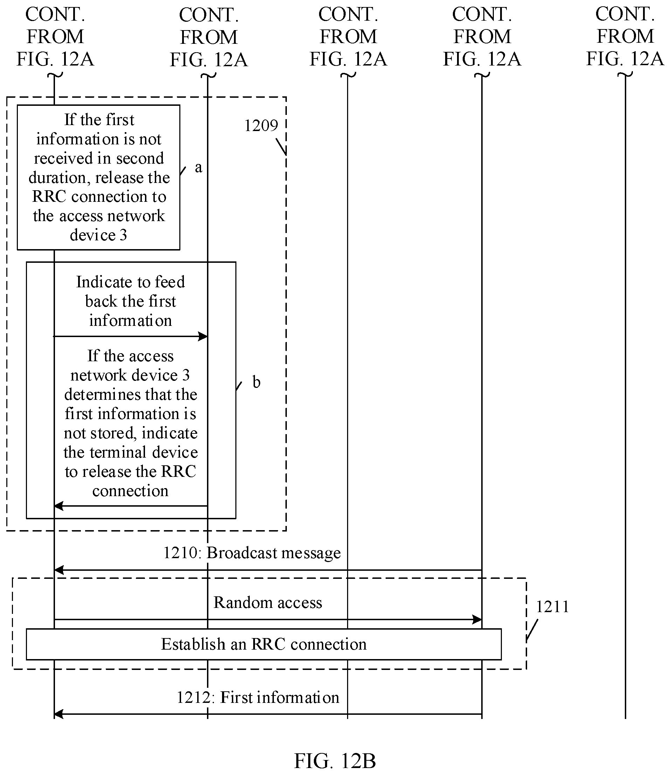

Optionally, the terminal device may not store the identifier of the access network device that forwards the first information, and the first access network device may not indicate, to the terminal device, the first duration for triggering the terminal device to establish a connection. Instead, as long as detecting any broadcast message, the terminal device establishes a connection to an access network device that sends the broadcast message. In this case, it may be understood that the access network device that stores the first information corresponding to the terminal device feeds back the first information to the terminal device; otherwise, the terminal device releases the RRC connection. The following describes a detailed embodiment of the method with reference to FIG. 12A and FIG. 12B.

In this embodiment, for ease of description, the first access network device is represented as an access network device 1, an access network device configured to store first information is represented as an access network device 2, and an access network device that does not store the first information is represented as an access network device 3, or is referred to as a third access network device. It may be understood that the access network device 2 is the second access network device in FIG. 3 of this application.

FIG. 12A and FIG. 12B are still another schematic flowchart of a communication method according to an embodiment of this application. As shown in FIG. 12A and FIG. 12B, a method 1200 includes the following steps.

Step 02: A base station 1 broadcasts ephemeris information.

This step is optional.

Step 1201: A terminal device establishes a connection to the access network device 1.

Step 1202: The terminal device sends a first request to the access network device 1, and the access network device 1 receives the first request.

Step 1203: The terminal device and the access network device 1 determine an identifier used by the terminal device in an initial access procedure.

In this embodiment, the identifier is also referred to as a negotiated ID.

For details about this step, refer to the descriptions in step 805. Details are not described again.

Step 1204: When a feeder link between the access network device 1 and a core network device is available, the access network device 1 indicates the first request of the terminal device to the core network device.

Step 1205: The core network device determines the access network device 2 that forwards the first information replied to the terminal device.

In this embodiment, there may be one or more access network devices 2 determined by the core network device.

It should be noted herein that, how the core network device specifically forwards the first information to the access network device 2 is not limited in this embodiment.

Optionally, the core network device may perform determining based on the ephemeris information. For example, the core network device determines, as the access network device 2 based on the ephemeris information, an access network device that can cover the terminal device earliest and can obtain the first information from the core network device earliest.

Optionally, the core network device may send the first information to any one or more base stations. In this manner, the core network device does not perform a step of determining the access network device 2, but randomly selects the access network device 2.

Step 1206: The core network device indicates, to the access network device 2, the first information replied to the terminal device.

It may be understood that, that the core network device indicates, to the access network device 2, the first information replied to the terminal device specifically means that when a feeder link between the second access network device and a ground station is available, the core network device indicates, to the access network device 2, the first information replied to the terminal device.

Specifically, in this embodiment, when sending the first information to the access network device 2, the core network device further indicates the negotiated ID, so that the access network device 2 determines the terminal device corresponding to the first information replied by the core network device.

Step 1207: The terminal device detects a broadcast message of the access network device 3.

Step 1208: The terminal device establishes a connection to the access network device 3.

Specifically, the step includes: The terminal device initiates random access to the access network device 3; and step 11072: The terminal device establishes a connection to the access network device 3.

Step 1209: Release the connection to the access network device 3.

Optionally, there may be two implementations for this step:

As shown in FIG. 12A and FIG. 12B, in an implementation (a), if the terminal device does not receive, in second duration, the first information sent by the access network device 3, the terminal device automatically releases an RRC connection to the access network device 3.

As shown in FIG. 2, in an implementation (b), after establishing the connection to the access network device 3, the terminal device may send third information to the access network device 3, where the third information indicates the access network device 3 to send the information replied by the core network device to the terminal device. Correspondingly, after receiving the third information, the access network device 3 determines, based on the negotiated ID of the terminal device, that no response information replied by the core network device to the terminal device is stored, and then sends fourth information to the terminal device. The fourth information indicates the terminal device to release the connection to the access network device 3. The terminal device releases the RRC connection to the access network device 3.

Step 1210: The terminal device detects a broadcast message of the access network device 2.

Step 1211: Establish a connection to the access network device 2.

Specifically, the step includes: The terminal device initiates random access to the access network device 2; and the terminal device establishes an RRC connection to the access network device 2.

In addition, in this embodiment, when establishing the connection to the access network device 2, the terminal device sends, to the access network device 2, the negotiated ID previously determined by the terminal device and the access network device 1.

Step 1212: The access network device 2 determines, based on the negotiated ID, that the first information replied by the core network device to the terminal device is stored, and sends the first information to the terminal device.

Optionally, the terminal device may further send fifth information to the access network device 2. The fifth information indicates the access network device 2 to feed back information replied by the core network device to the terminal based on the first information. That is, it may be considered that the terminal device explicitly indicates the access network device 2 to feed back the information fed back by the core network device to the terminal device based on the first information.

It can be learned that in the embodiment shown in FIG. 12A and FIG. 12B, provided that the terminal device detects a broadcast message, the terminal device establishes a connection to an access network device that sends the broadcast message. In this case, if the access network device to which the terminal device establishes the connection stores the first information fed back by the core network device to the terminal device, the access network device sends the first information to the terminal device, to help the terminal device access a network. Otherwise, if the first information is not stored, no message is sent to the terminal device, or the terminal device is indicated to release the RRC connection, to notify the terminal device that the current access network device does not store the first information sent by the core network device to the terminal device.

It should be noted that the embodiment of FIG. 12A and FIG. 12B is described by using only one access network device 2 determined by the core network device as an example. It may be understood that when the core network device determines that there are a plurality of access network devices 2 that send the first information, the core network device sends the first information and the negotiated ID to the plurality of access network devices 2.

Optionally, the core network device may configure one timer for the one or more access network devices 2. Correspondingly, the plurality of access network devices delete the stored first information when the timer expires. For example, the core network device may determine the timer by using time at which the access network device 2 can cover the terminal device earliest. For example, the access network device 2 in the embodiment of FIG. 12A and FIG. 12B definitely covers UE after 100 µs. In this case, the timer may be set to 100 µs. In this way, when it is ensured that the terminal device can receive the information replied by the core network device, it can be further ensured that all access network devices that store the first information delete the first information at the earliest time.

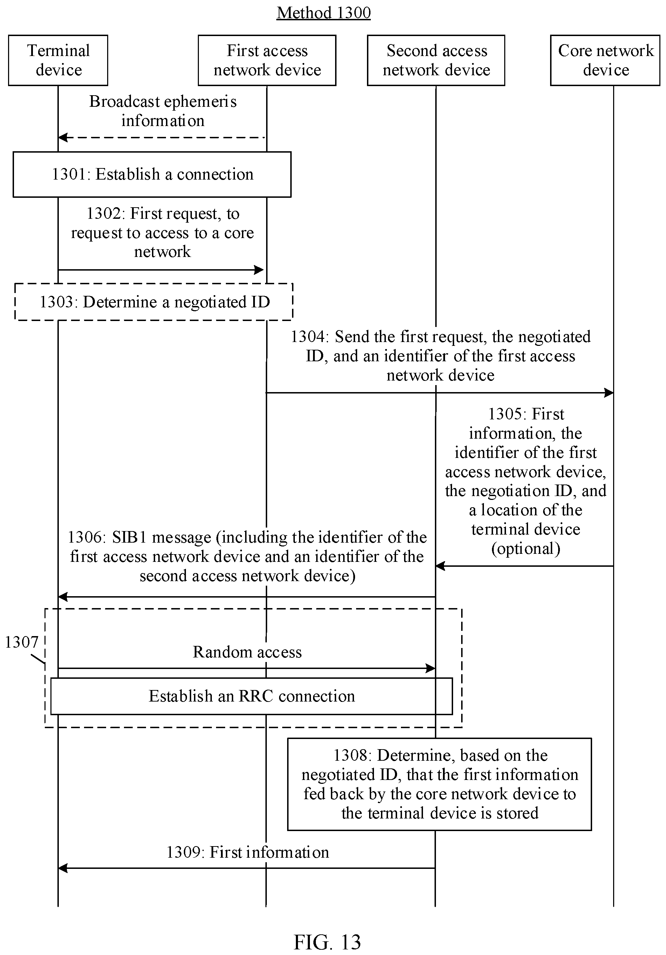

FIG. 13 is a schematic flowchart of a communication method according to still another embodiment of this application. In the embodiment of FIG. 13, a terminal device detects, by default, only a broadcast message including an identifier of a first access network device. Then, a core network device determines a second access network device that stores and forwards first information replied to the terminal device, and sends the identifier of the first access network device to the second access network device, so that the second access network device further broadcasts the identifier of the first access network device when broadcasting a message. The following describes a detailed embodiment of the method by using an example in which the second access network device and the first access network device are not a same access network device.

As shown in FIG. 13, the method 1300 in the embodiment of FIG. 13 includes the following steps.

Step 1301: The terminal device establishes a connection to the first access network device.

Optionally, the first access network device may further send ephemeris information to the terminal device. For example, the first access network device broadcasts the ephemeris information, or sends the ephemeris information to the terminal device by using an RRC message after the connection is established.

Step 1302: The terminal device sends a first request to the first access network device, and the first access network device receives the first request.

Step 1303: The terminal device and the first access network device determine an identifier used by the terminal device in an initial access procedure.

In this embodiment, the identifier is also referred to as a negotiated ID.

Specifically, in this embodiment, the negotiated ID needs to be globally unique because different access network devices need to send messages to the terminal device. If the negotiated ID is not globally unique, IDs negotiated by different access network devices and different terminal devices may be duplicate.

Step 1304: When a feeder link between the first access network device and the core network device is available, the first access network device indicates the first request of the terminal device to the core network device.

In this embodiment, when sending the first request to the core network device, the first access network device further indicates the negotiated ID and the identifier of the first access network device.

Optionally, the first access network device may further send location information of the terminal device to the core network device.

Step 1305: The core network device sends the first information, the negotiated ID, and the identifier of the first access network device to the second access network device.

It should be noted herein that a manner of determining the second access network device by the core network device is still not limited in this embodiment.

For example, the second access network device is determined, based on the ephemeris information, as an access network device that can obtain the first information earlier and can cover the terminal device earliest.

In this embodiment, the core network device sends the identifier of the first access network device to the second access network device, to mainly enable the second access network device to broadcast the identifier of the first access network device during broadcasting. That is, when the second access network device performs broadcasting, a broadcast identifier of the access network device includes the identifier of the first access network device and an identifier of the second access network device.

Step 1306: The second access network device sends a broadcast message, where the broadcast message includes the identifier of the first access network device; and the terminal device detects the broadcast message including the identifier of the first access network device.

It should be understood that access network devices that can broadcast the identifier of the first access network device include the first access network device and the second access network device. However, the first access network device does not store the first information, and the second access network device stores the first information. Therefore, in this embodiment, when the terminal device detects the broadcast message for broadcasting the identifier of the first access network device, if the message is broadcast by the first access network device, the terminal device does not receive the first information. In this case, the terminal device may release the connection. Specifically, for a manner of releasing the connection, refer to content of step 1208 in the embodiment shown in FIG. 12A and FIG. 12B. Details are not described again.

Optionally, in this embodiment, the second access network device may include the identifier of the first access network device in a message broadcast only in a time period in which the terminal device is covered. For an implementation of the method, refer to the detailed descriptions in the third implementation of step 704 in the embodiment of FIG. 7. Details are not described again.

In this embodiment, it is assumed that the broadcast message including the identifier of the first access network device is from the second access network device. For a case in which the broadcast message is not from the second access network device, refer to the descriptions in step 1306. Details are not described herein again.

Step 1307: The terminal device establishes a connection to the second access network device.

Similarly, the step includes: The terminal device initiates random access to the second access network device; and the terminal device establishes an RRC connection to the second access network device.

In this embodiment, in a process of establishing the connection to the second access network device, the terminal device sends the negotiated ID to the second access network device.

Step 1308: The second access network device determines, based on the negotiated ID, that the first information replied by the core network device to the terminal device is stored, and determines to send the first information to the terminal device.

The second access network device stores a correspondence between the negotiated ID and the first information, so that the second access network device can determine the stored first information based on the negotiated ID sent by the terminal device.

Step 1309: The second access network device sends the first information to the terminal device.

It can be learned that, in the communication method provided in this embodiment, for a terminal device side, the terminal device detects the broadcast message including the identifier of the first access network device, and then when the broadcast message including the identifier of the first access network device is detected, establishes a connection to an access network device that the broadcast message is from. Correspondingly, on a core network device side, the identifier of the first access network device is sent to the second access network device, so that the second access network device broadcasts the identifier of the first access network device during broadcasting. In this way, after the terminal device detects the broadcast message of the second access network device and establishes the connection to the second access network device, the second access network device may determine that the first information replied by the core network device to the terminal device is stored, so that a network access procedure of the terminal device continues to be completed.

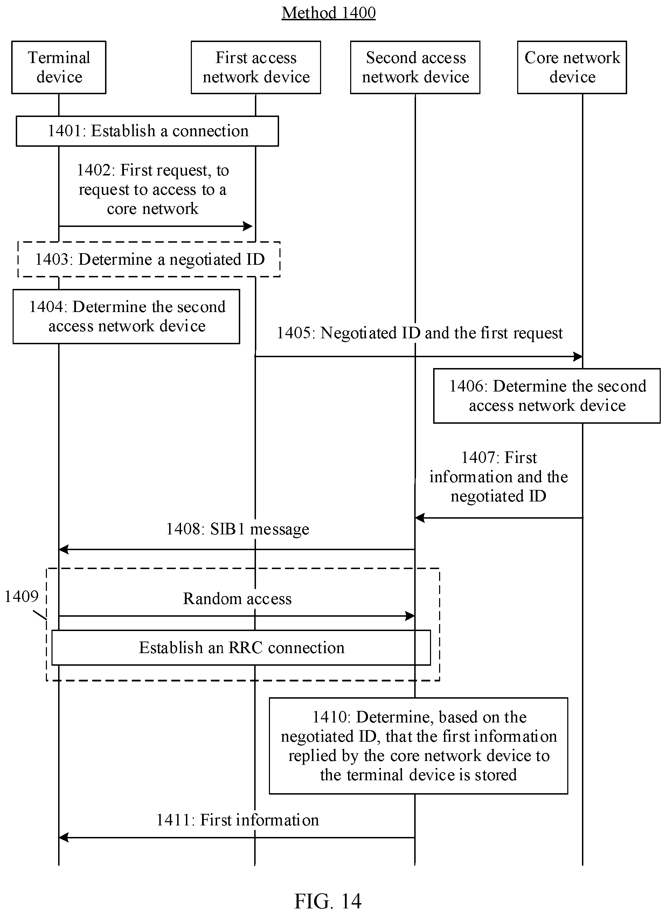

FIG. 14 is a schematic flowchart of a communication method according to still another embodiment of this application. As shown in FIG. 14, the embodiment of FIG. 14 includes the following steps.

Step 1401: A terminal device establishes a connection to a first access network device.

Step 1402: The terminal device sends a first request to the first access network device, and the first access network device receives the first request.

Step 1403: The terminal device and the first access network device determine an identifier used by the terminal device in an initial access procedure.

Step 1404: The terminal device determines a second access network device to which a connection is initiated.

Alternatively, the terminal device may determine, from another perspective, the second access network device that stores first information replied by a core network device to the terminal device.

Step 1405: When a feeder link between the first access network device and the core network device is available, the first access network device sends the negotiated ID and the first request of the terminal device to the core network device.

Step 1406: The core network device determines the second access network device that stores the first information replied to the terminal device.

Alternatively, the terminal device may determine, from another perspective, the second access network device to which the terminal device initiates a connection.

In this embodiment, when determining the second access network device, the terminal device and the core network device need to ensure that the second access network devices determined by the terminal device and the core network device are the same. Therefore, in an implementation, for example, a same rule may be preset in the terminal device and the core network device, and the rule is used to ensure that the second access network devices determined by the terminal device and the core network device are the same.

For example, the rule may be: determining, as the second access network device, an access network device that can obtain, from the core network device earliest, the first information replied to the terminal device and can cover a location of the terminal device earliest. In some implementation, the terminal device and the core network device determine the second access network device based on ephemeris information and at least one of the following information: the location of the terminal device and current time.

Step 1407: The core network device sends the first information and the negotiated ID of the terminal device to the second access network device.

Step 1408: The terminal device detects a broadcast message of the second access network device.

Step 1409: The terminal device establishes a connection to the second access network device.

In this embodiment, in a process of establishing the connection to the second access network device, the terminal device sends the negotiated ID to the second access network device.

Similarly, the step includes: The terminal device initiates random access to the second access network device; and the terminal device establishes an RRC connection to the second access network device.

Step 1410: The second access network device determines, based on the negotiated ID, that the first information replied by the core network device to the terminal device is stored, and determines to send the first information to the terminal device.

Optionally, the terminal device may indicate the access network device 2 to send, to the terminal device, the first information replied by the core network device.

Step 1411: The second access network device sends the first information to the terminal device.

It can be learned that, in the method provided in this embodiment, the terminal device and the core network device each determine the same second access network device according to the preset rule, so that an access network device to which the terminal device establishes a connection is an access network device that stores the first information replied by the core network device to the terminal device, to continue to complete a network access procedure of the terminal device.

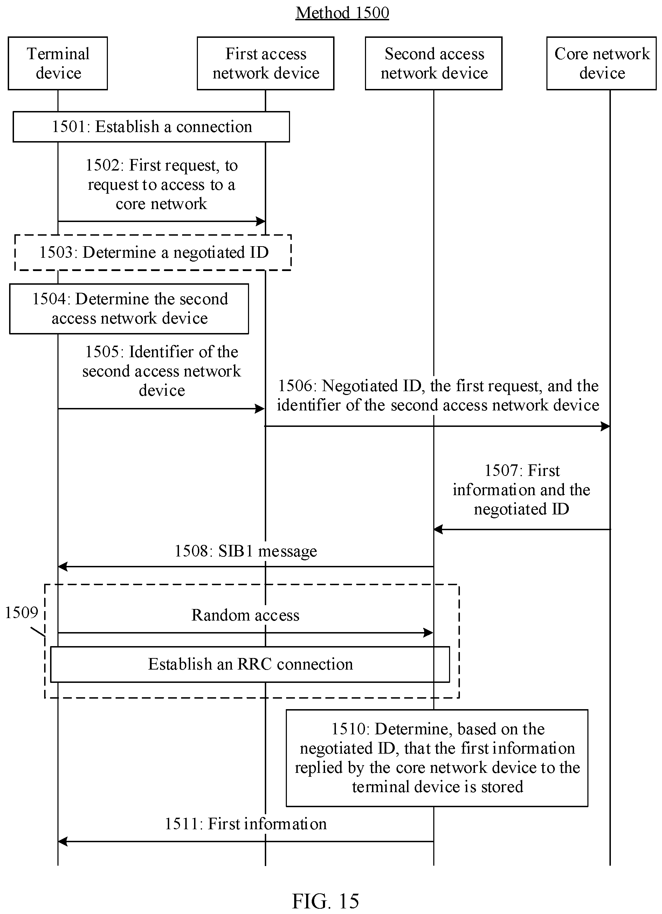

FIG. 15 is a schematic flowchart of a communication method according to still another embodiment of this application. As shown in FIG. 15, the embodiment of FIG. 15 includes the following steps.

Step 1501: A terminal device establishes a connection to a first access network device.

Step 1502: The terminal device sends a first request to the first access network device, and the first access network device receives the first request.

Step 1503: The terminal device and the first access network device determine an identifier used by the terminal device in an initial access procedure.

Step 1504: The terminal device determines a second access network device to which a connection is initiated.

Alternatively, the terminal device may determine, from another perspective, the second access network device that stores first information replied by a core network device to the terminal device.

Step 1505: The terminal device sends an identifier of the second access network device to the first access network device.

It may be understood that the identifier of the second access network device may be considered as the first identifier in the embodiment of FIG. 7.

Specifically, in this embodiment, the terminal device sends the identifier of the second access network device to the first access network device, mainly to forward, through the first access network device, the identifier of the second access network device to the core network device, so that the core network device can determine an access network device to which the terminal device establishes a connection, or from another perspective, the core network device determines the second access network device that stores the first information replied to the terminal device.

Step 1506: When a feeder link between the first access network device and the core network device is available, the first access network device sends the negotiated ID, the first request of the terminal device, and the identifier of the second access network device to the core network device.

Alternatively, the terminal device may determine, from another perspective, the second access network device to which the terminal device initiates a connection.

For example, the terminal device can determine, as the second access network device, an access network device that can obtain, from the core network device earliest, the first information replied to the terminal device and can cover a location of the terminal device earliest. In some implementation, the terminal device determines the second access network device based on ephemeris information and at least one of the following information: the location of the terminal device and current time.

Step 1507: The core network device sends the first information and the negotiated ID of the terminal device to the second access network device.

Step 1508: The terminal device detects a broadcast message of the second access network device.

Step 1509: The terminal device establishes a connection to the second access network device.

Similarly, the step includes: The terminal device initiates random access to the second access network device; and the terminal device establishes an RRC connection to the second access network device.

In this embodiment, when establishing the connection to the second access network device, the terminal device sends the negotiated ID to the second access network device.

Step 1510: The second access network device determines, based on the negotiated ID, that the first information replied by the core network device to the terminal device is stored, and determines to send the first information to the terminal device.

Optionally, the terminal device may indicate the second access network device to send, to the terminal device, the first information replied by the core network device.

Step 1511: The second access network device sends the first information to the terminal device.

It can be learned that, in the method provided in this embodiment, the terminal device determines the second access network device to which the connection is to be established, or the terminal device determines, from another perspective, the second access network device that stores the first information. Then, the terminal device notifies the first access network device and the core network device of the identifier of the second access network device, to ensure that the core network device sends, to the second access network device to which the terminal device is to establish the connection, the first information replied to the terminal device, to help the terminal device continue to complete a network access procedure of the terminal device.

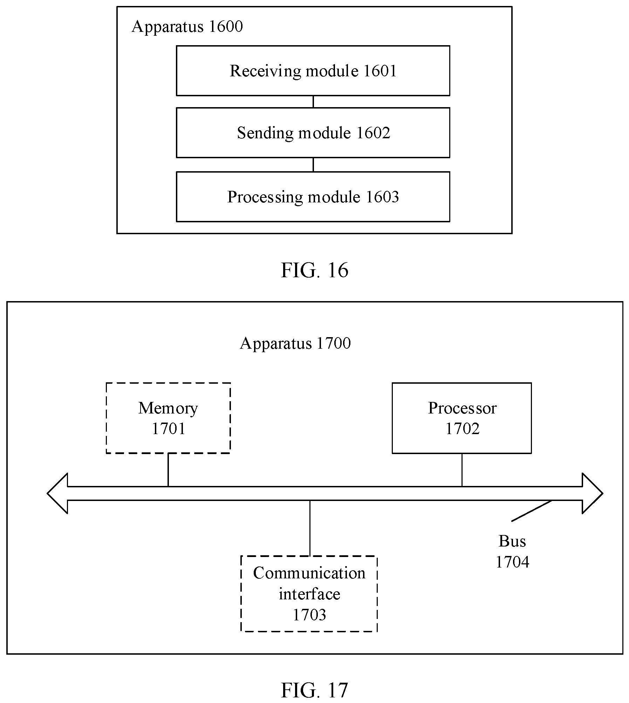

The foregoing describes in detail the communication method in embodiments of this application with reference to FIG. 7 to FIG. 15. The following describes provide a communication apparatus in this application with reference to FIG. 16 and FIG. 17.

FIG. 16 is a diagram of a structure of a communication apparatus according to an embodiment of this application. Specifically, as shown in FIG. 16, the apparatus 1600 includes a receiving module 1601, a sending module 1602, and a processing module 1603.

In a first embodiment, the apparatus 1600 may be used in a terminal device.

Specifically, the sending module 1602 is configured to send a first request to a first access network device, where the first request indicates that the terminal device requests to access a core network. The processing module 1603 is configured to establish a connection to a second access network device and send an identifier of the terminal device to the second access network device. The receiving module 1601 is configured to receive first information from the second access network device, where the first information is information replied by the core network to the terminal device in response to the first request, and the first information corresponds to the identifier of the terminal device.

In a possible implementation, the second access network device and the first access network device are a same access network device, or the second access network device and the first access network device are different access network devices.

In a possible implementation, the receiving module 1601 is configured to receive second information sent by the first access network device, where the second information indicates first duration; and the processing module 1603 is further configured to establish the connection to the second access network device after the first duration.

In a possible implementation, the first duration is determined by the first access network device based on ephemeris information.

In a possible implementation, the processing module 1602 is further configured to: obtain a first identifier, where the first identifier is used to identify the second access network device; and when the first identifier from the second access network device is received, establish the connection to the second access network device.

In a possible implementation, the receiving module 1601 is further configured to receive the first identifier from the first access network device.

In a possible implementation, the processing module 1602 is further configured to determine the first identifier based on ephemeris information.

In a possible implementation, the sending module 1602 is further configured to send the first identifier to the first access network device.

In a possible implementation, the processing module 1602 is further configured to: establish a connection to a third access network device; and if the first information sent by the third access network device is not received in second duration, release the connection to the third access network device.

In a possible implementation, the sending module 1602 is further configured to send third information to the third access network device, where the third information indicates the third access network device to send the information replied by the core network device to the terminal device. The receiving module 1601 is further configured to receive fourth information sent by the third access network device in response to the third information, where the fourth information indicates the terminal device to release the connection to the third access network device. The processing module 1602 is further configured to release the connection to the third access network device.

In a possible implementation, the sending module 1602 is further configured to: send fifth information to the second access network device, where the fifth information indicates the second access network device to send the information replied by the core network device to the terminal device.

In a second embodiment, the communication apparatus may be used in a first access network device.

Specifically, the receiving module 1601 is configured to receive a first request, where the first request indicates that a terminal device requests to access a core network. The sending module 1602 is configured to send second information to the terminal device, where the second information indicates first duration, the terminal device establishes a connection to a second access network device after the first duration ends, and the second access network device is configured to store first information replied by a core network device to the terminal device in response to the first request. The sending module 1602 is further configured to send the first request to the core network device.

In a possible implementation, when the second access network device and the first access network device are different access network devices, the sending module 1602 is further configured to send an identifier of the second access network device to the core network device.

In a possible implementation, the first duration is determined by the first access network device based on ephemeris information.

In a possible implementation, when the second access network device and the first access network device are a same access network device, the receiving module 1601 is further configured to receive fifth information from the terminal device, where the fifth information indicates the second access network device to send the information replied by the core network device to the terminal device.

In a third embodiment, the communication apparatus may be used in a first access network device.

Specifically, the receiving module 1601 is configured to receive a first request, where the first request indicates that a terminal device requests to access a core network. The sending module 1602 is configured to send a first identifier to the terminal, where the first identifier is used to identify a second access network device, and the second access network device is configured to store first information replied by a core network device to the terminal device in response to the first request. The sending module 1602 is further configured to send the first request to the core network device.

In a possible implementation, the sending module 1602 is further configured to send the first identifier to the core network device, where the first identifier is used by the core network device to determine to send the first information to the terminal device through the second access network device.

In a possible implementation, the second access network device and the first access network device are a same access network device, or the second access network device and the first access network device are different access network devices.

In a possible implementation, when the second access network device and the first access network device are a same access network device, the receiving module 1601 is further configured to receive fifth information from the terminal device, where the fifth information indicates to send the information replied by the core network device to the terminal device.

In a fourth embodiment, the communication apparatus may be used in a second access network device.

Specifically, the receiving module 1601 is configured to receive first information from a core network device, where the first information is information replied by a core network to a terminal device in response to a first request, the first request indicates that the terminal device requests to access the core network, and the first information corresponds to an identifier of a first terminal device. The sending module 1602 is configured to receive the identifier of the first terminal device, and send the first information to the terminal device that sends the identifier of the first terminal device.

In a possible implementation, the identifier of the first terminal device is sent by the core network device to the second access network device.

FIG. 17 is a diagram of a structure of a communication apparatus according to another embodiment of this application. The apparatus shown in FIG. 17 may be configured to perform the method according to any one of the foregoing embodiments.

As shown in FIG. 17, the apparatus 1700 in this embodiment includes a memory 1701 and a processor 1702. In an implementation, the apparatus 1700 further includes a communication interface 1703 and a bus 1704. The memory 1701, the processor 1702, and the communication interface 1703 are communicatively connected to each other through the bus 1704.

The memory 1701 may be a read only memory (read only memory, ROM), a static storage device, a dynamic storage device, or a random access memory (random access memory, RAM). The memory 1701 may store a program. When the program stored in the memory 1701 is executed by the processor 1702, the processor 1702 is configured to perform steps of the methods shown in FIG. 7 to FIG. 15.

The processor 1702 may be a general-purpose central processing unit (central processing unit, CPU), a microprocessor, an application-specific integrated circuit (application-specific integrated circuit, ASIC), or one or more integrated circuits, and is configured to execute a related program, to implement the methods shown in FIG. 7 to FIG. 15 in this application.

The processor 1702 may alternatively be an integrated circuit chip and has a signal processing capability. In an implementation process, the steps of the methods in FIG. 7 to FIG. 15 in embodiments of this application may be completed by using an integrated logic circuit of hardware in the processor 1702 or by using instructions in a form of software.

The processor 1702 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be a conventional processor or the like.

The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory 1001. The processor 1702 reads information in the memory 1701, and completes, in combination with hardware of the processor, functions that need to be performed by units included in the apparatus in this application. For example, the processor may perform steps/functions in the embodiments shown in FIG. 7 to FIG. 15.

The communication interface 1703 may use, but not limited to, a transceiver apparatus of a transceiver type, to implement communication between the apparatus 1700 and another device or a communication network.

The bus 1704 may include a path for information transfer between various components (for example, the memory 1701, the processor 1702, and the communication interface 1703) of the apparatus 1700.

It should be understood that the apparatus 1700 shown in this embodiment of this application may be an electronic device, or may be a chip configured in an electronic device. The apparatus 1700 may be deployed in a terminal device, or may be deployed in a network device.

This application further provides a computer program product. The computer program product includes a computer program (which may also be referred to as code or instructions). When the computer program is run, the steps performed by the terminal, a verification network element, or a storage network element in any one of the embodiments shown in FIG. 7 to FIG. 15 may be implemented.

This application further provides a computer-readable storage medium. The computer-readable storage medium stores a computer program (which may also be referred to as code or instructions). When the computer program is run, the steps performed by the terminal, a verification network element, or a storage network element in any one of the embodiments shown in FIG. 7 to FIG. 15 may be implemented.

An embodiment of this application provides a communication system. The system includes the foregoing terminal device, first access network device, second access network device, and core network device.

All or some of the foregoing embodiments may be implemented using software, hardware, firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be a usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists, where A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof means any combination of these items, including a single item (piece) or any combination of a plurality of items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as a limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computing device (which may be a personal computer, a server, a network device, or the like) to perform all or some of the steps of the methods described in embodiments of this application. The foregoing storage medium includes: any medium that can store program code, such as a USB flash disk, a removable hard disk, a read-only memory, a random access memory, a magnetic disk, or an optical disc.

## Claims

1. A communication method, applied to a terminal device, and comprising:
sending a first request to a first access network device, wherein the first request indicates that the terminal device requests to access a core network;
establishing a connection to a second access network device, and sending an identifier of the terminal device to the second access network device; and
receiving first information from the second access network device, wherein the first information is information replied by the core network to the terminal device in response to the first request, and the first information corresponds to the identifier of the terminal device.

2. The method according to claim 1, wherein the second access network device and the first access network device are a same access network device, or the second access network device and the first access network device are different access network devices.

3. The method according to claim 1 or 2, wherein the method further comprises:
receiving second information sent by the first access network device, wherein the second information indicates first duration; and
establishing the connection to the second access network device comprises:
establishing the connection to the second access network device after the first duration.

4. The method according to claim 3, wherein the first duration is determined by the first access network device based on ephemeris information.

5. The method according to claim 1 or 2, wherein the method further comprises:
obtaining a first identifier, wherein the first identifier is used to identify the second access network device; and
establishing the connection to the second access network device comprises:
when the first identifier from the second access network device is received, establishing the connection to the second access network device.

6. The method according to claim 5, wherein obtaining the first identifier comprises:
receiving the first identifier from the first access network device.

7. The method according to claim 5, wherein obtaining the first identifier comprises:
determining the first identifier based on ephemeris information.

8. The method according to claim 7, wherein the method further comprises:
sending the first identifier to the first access network device.

9. The method according to any one of claims 1 to 8, wherein the method further comprises:
establishing a connection to a third access network device; and
if the first information sent by the third access network device is not received in second duration, releasing the connection to the third access network device.

10. The method according to claim 9, wherein the method further comprises:
sending third information to the third access network device, wherein the third information indicates the third access network device to send the information replied by the core network device to the terminal device;
receiving fourth information sent by the third access network device in response to the third information, wherein the fourth information indicates the terminal device to release the connection to the third access network device; and
releasing the connection to the third access network device.

11. The method according to any one of claims 1 to 10, wherein the method further comprises:
sending fifth information to the second access network device, wherein the fifth information indicates the second access network device to send the information replied by the core network device to the terminal device.

12. A communication method, applied to a first access network device, and comprising:
receiving a first request, wherein the first request indicates that a terminal device requests to access a core network;
sending second information to the terminal device, wherein the second information indicates first duration, the terminal device establishes a connection to a second access network device after the first duration ends, and the second access network device is configured to store first information replied by a core network device to the terminal device in response to the first request; and
sending the first request to the core network device.

13. The method according to claim 12, wherein the second access network device and the first access network device are a same access network device, or the second access network device and the first access network device are different access network devices.

14. The method according to claim 12 or 13, wherein when the second access network device and the first access network device are different access network devices, the method further comprises:
sending an identifier of the second access network device to the core network device.

15. The method according to any one of claims 12 to 14, wherein the first duration is determined by the first access network device based on ephemeris information.

16. The method according to claim 13 or 15, wherein when the second access network device and the first access network device are a same access network device, the method further comprises:
receiving fifth information from the terminal device, wherein the fifth information indicates to send the information replied by the core network device to the terminal device.

17. A communication method, applied to a first access network device, and comprising:
receiving a first request, wherein the first request indicates that a terminal device requests to access a core network;
sending a first identifier to the terminal, wherein the first identifier is used to identify a second access network device, and the second access network device is configured to store first information replied by a core network device to the terminal device in response to the first request; and
sending the first request to the core network device.

18. The method according to claim 17, wherein the method further comprises:
sending the first identifier to the core network device, wherein the first identifier is used by the core network device to determine to send the first information to the terminal device through the second access network device.

19. The method according to claim 17 or 18, wherein the second access network device and the first access network device are a same access network device, or the second access network device and the first access network device are different access network devices.

20. The method according to claim 19, wherein when the second access network device and the first access network device are a same access network device, the method further comprises:
receiving fifth information from the terminal device, wherein the fifth information indicates to send the information replied by the core network device to the terminal device.

21. A communication method, applied to a second access network device, and comprising:
receiving first information from a core network device, wherein the first information is information replied by a core network to a terminal device in response to a first request, the first request indicates that the terminal device requests to access the core network, and the first information corresponds to an identifier of a first terminal device; and
receiving the identifier of the first terminal device, and sending the first information to the terminal device that sends the identifier of the first terminal device.

22. The method according to claim 21, wherein the identifier of the first terminal device is sent by the core network device to the second access network device.

23. A communication apparatus, comprising a processor; and
the processor is configured to enable the communication apparatus to implement the method according to any one of claims 1 to 11 by executing a computer program and/or by using a logic circuit.

24. A communication apparatus, comprising a processor; and
the processor is configured to enable the communication apparatus to implement the method according to any one of claims 12 to 16 by executing a computer program and/or by using a logic circuit.

25. A communication apparatus, comprising a processor; and
the processor is configured to enable the communication apparatus to implement the method according to any one of claims 17 to 20 by executing a computer program and/or by using a logic circuit.

26. A communication system, comprising the communication apparatus according to claim 20, claim 21, or claim 22.

27. A computer-readable medium, wherein the computer-readable medium stores program code for execution by a computer, and the program code comprises instructions for performing the method according to any one of claims 1 to 11, claims 12 to 16, or claims 17 to 20.

28. A computer program product, wherein the computer program product comprises computer program code, and when the computer program code is run on a computer, the computer is enabled to implement the method according to any one of claims 1 to 11, claims 12 to 16, or claims 17 to 20.

29. A chip, comprising at least one processor and a communication interface, wherein the communication interface and the at least one processor are interconnected through a line, and the at least one processor is configured to run a computer program or instructions, to perform the communication method according to any one of claims 1 to 11, claims 12 to 16, or claims 17 to 20.

30. A communication method, applied to a core network device, and comprising:
receiving a first request sent by a first access network device, wherein the first request indicates that a terminal device requests to access a core network; and
sending first information to a second access network device, wherein the first information is information replied by the core network device to the terminal device in response to a first request, wherein
the second access network device is determined in any one of the following manners: the second access network device is indicated by the first access network device to the core network device, indicated by the terminal device to the core network device, or determined by the core network device based on ephemeris information.

31. The method according to claim 30, wherein the method further comprises:
indicating the second access network device to delete the stored first information after third duration.

32. The method according to claim 30 or 31, wherein the second access network device and the first access network device are a same access network device, or the second access network device and the first access network device are different access network devices.

33. The method according to any one of claims 30 to 32, wherein the method further comprises: indicating a location of the terminal device to the second access network device.

34. A communication method, applied to a terminal device, and comprising:
sending a first request to a first access network device, wherein the first request indicates that the terminal device requests to access a core network;
obtaining, from the first access network device or locally, indication information that indicates the terminal device to access a second access network device;
establishing a connection to the second access network device based on the indication information, and sending an identifier of the terminal device to the second access network device; and
receiving first information from the second access network device, wherein the first information is information replied by the core network to the terminal device in response to the first request, and the first information corresponds to the identifier of the terminal device.

35. The method according to claim 34, wherein the second access network device and the first access network device are a same access network device, or the second access network device and the first access network device are different access network devices.

36. The method according to claim 34 or 35, wherein the indication information is first duration obtained from the first access network device; and
establishing the connection to the second access network device based on the indication information comprises:
establishing the connection to the second access network device after the first duration.

37. The method according to claim 34 or 35, wherein the indication information is a first identifier sent by the first access network device, and the first identifier is used to identify the second access network device that stores the first information replied by a core network device.

38. The method according to claim 34 or 35, wherein the indication information is a first identifier locally determined by the terminal device based on ephemeris information, and the first identifier is used to identify the second access network device that stores the first information replied by a core network device.
